(19) Europäisches Patentamt
European Patent Office
Office européen des brevets

(11) EP 3 955 029 A1

(12) EUROPEAN PATENT APPLICATION
published in accordance with Art. 153(4) EPC

(43) Date of publication:
16.02.2022 Bulletin 2022/07

(51) International Patent Classification (IPC):
G01S 17/95 (2006.01)

(21) Application number: 20787774.7

(22) Date of filing: 08.04.2020

(52) Cooperative Patent Classification (CPC):
G01S 17/95; Y02A 90/10

(86) International application number:
PCT/JP2020/015787

(87) International publication number:
WO 2020/209279 (15.10.2020 Gazette 2020/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.04.2019 JP 2019073743
08.04.2019 JP 2019073742
27.01.2020 PCT/JP2020/002798

(71) Applicant: MITSUBISHI ELECTRIC
CORPORATION
Chiyoda-ku
Tokyo 100-8310 (JP)

(72) Inventors:
• KAMEYAMA, Shumpei
  Tokyo 100-8310 (JP)
• KOTAKE, Nobuki
  Tokyo 100-8310 (JP)
• KAJIYAMA, Yutaka
  Tokyo 100-8310 (JP)
• SAKIMURA, Takeshi
  Tokyo 100-8310 (JP)
• TAKABAYASHI, Mikio
  Tokyo 100-8310 (JP)

(74) Representative: Plasseraud IP
66, rue de la Chaussée d'Antin
75440 Paris Cedex 09 (FR)

(54) WIND MEASUREMENT LIDAR DEVICE

(57) In the conventional methods, the prediction accuracy of information of an incoming wind such as the incoming wind speed, the shear, or the wind direction decreases.

A wind measurement lidar device 1B is mounted on a wind turbine 2 and transmits transmission light, which is pulses of laser light, into the atmosphere in a plurality of beam directions determined with respect to a front direction of the wind turbine 2 and measures the wind speed at each of a plurality of distances from the wind turbine in the plurality of beam directions from a Doppler frequency shift of reflection light, which is the transmission light reflected by particles moving together with the atmosphere, with respect to the transmission light. Included are: spectrum integrating units 12c and 12e to obtain an integrated spectrum obtained by integrating spectra obtained from a plurality of divided reception signals of a plurality of the pulses transmitted after the wind speed is calculated in a previous time for each of a plurality of wind speed measurement sections being a combination of a beam direction and a time interval; a wind speed calculating unit 12h to calculate the wind speed in each of the plurality of wind speed measurement sections from the integrated spectrum having an SN ratio greater than or equal to a first threshold value; and an incoming wind information predicting unit 16 to predict incoming wind information which is information of incoming wind, which is wind arriving at and coming to the wind turbine 2, based on the wind speed of each of the plurality of wind speed measurement sections.

FIG. 6

EP 3 955 029 A1

Printed by Jouve, 75001 PARIS (FR)

**Description**

TECHNICAL FIELD

The present disclosure relates to a wind measurement lidar device to measure the wind speed in the atmosphere.

BACKGROUND ART

In the prior art, wind measurement light detection and ranging (lidar) devices to measure the wind are known (see, for example, Patent Literatures 1 and 2 and Non-Patent Literature 1). The wind measurement lidar device transmits laser light to the atmosphere and generates a reception signal by detecting coherently reception light being the laser light scattered by aerosol in the atmosphere, returned and received. The spectrum of the reception signal is analyzed to determine the Doppler frequency shift between the transmission light and the reception light. The Doppler frequency shift represents a Doppler wind speed (wind speed in a line-of-sight direction) which is a component (component in the line-of-sight direction) of the moving speed (wind speed) of aerosol in the transmission direction of the laser light. The wind measurement lidar device measures the Doppler wind speed in this manner.

In the wind measurement lidar device, a measurable distance increases or decreases depending on a change in atmospheric conditions. For example, when the amount of aerosol in the atmosphere is small, the power of light scattered and received by the lidar device is reduced, and the SN ratio (signal-to-noise ratio) of a reception signal is reduced. As the SN ratio of the reception signal decreases, the measurable distance of the lidar device decreases. In Patent Literature 1, a reception signal is analyzed, and a wind measurement lidar device is controlled based on the analysis result. In Patent Literature 1, the number of times of spectrum integration of the reception signal is able to be changed, and the number of times of spectrum integration of the reception signal increases or decreases depending on the SN ratio of the reception signal.

In a wind measurement lidar device mounted on a nacelle of a wind turbine and measures the speed of the wind coming to the wind turbine, there is a period in which transmission light or reception light is blocked by blades of the wind turbine and no valid spectrum is obtained. There is proposed a wind measurement lidar device that determines whether or not there is blocking by blades, from a waveform of a reception signal and does not integrate spectrums when there is blocking (see, for example, Patent Literature 3).

CITATION LIST

PATENT LITERATURES

> Patent Literature 1: EP 2884306 B1
> Patent Literature 2: EP 1589678 B1
> Patent Literature 3: WO 2017/130315 A

NON-PATENT LITERATURES

> Non-Patent Literature 1: T. Ando et al., "All-fiber coherent Doppler technologies at Mitsubishi Electric Corporation," IOP Conference Series: Earth and Environmental Science, Volume 1, 2008.
> Non-Patent Literature 2: D. Schlipf et al., "Field Testing of Feedforward Collective Pitch Control on the CART2 Using a Nacelle-Based Lidar Scanner," Journal of Physics Science Series 555, 012090, 2014.
> Non-Patent Literature 3: IEC 61400-12-1, Edition 2.0, 2017.

SUMMARY OF INVENTION

TECHNICAL PROBLEM

The control method disclosed in Patent Literature 1 has a problem when wind speeds of a plurality of distances are measured in a plurality of directions. In order to measure the wind speed of a long distance, it is necessary to increase the number of times of integration of the spectrum of a reception signal, and the measurement rate of the wind speed at a short distance decreases. Switching the direction of measuring the wind speed at the time when an SN ratio necessary for measurement is obtained at a short distance results in integration of a spectrum in a different direction at the long distance, thereby decreasing the measurement accuracy of the wind speed at the long distance.

In predicting the incoming wind speed, the prediction accuracy of the incoming wind speed decreases when the measurement accuracy of the wind speed at the long distance is low. There are similar problems also in predicting the shear (rate of change, in the altitude direction, in the value of a component of the wind speed in the front direction of the wind turbine) or the wind direction at the long distance. The incoming wind speed, the shear, the wind direction, and the like are information of the incoming wind being wind arriving at and coming to the wind turbine. Information of the incoming wind is referred to as incoming wind information.

An object of the present disclosure is to predict incoming wind information being information of the incoming wind being wind arriving at and coming to a wind turbine with higher accuracy than in the prior art.

SOLUTION TO PROBLEM

A wind measurement lidar device according to the present disclosure is a wind measurement lidar device mounted on a wind turbine and to transmit transmission light being pulses of laser light into atmosphere in a plurality of beam directions determined with respect to a front direction of the wind turbine and to measure a wind speed at each of a plurality of distances from the wind turbine in each of the plurality of beam directions from a Doppler frequency shift of reflection light with respect to the transmission light, the reflection light being the transmission light reflected by particles moving together with the atmosphere, the wind measurement lidar device including: a spectrum calculating unit to calculate a spectrum by performing a Fourier transform on each of a plurality of divided reception signals obtained by dividing a reception signal generated from the reflection light by a plurality of time intervals, the plurality of time intervals are determined in accordance with the plurality of distances respectively; a spectrum integrating unit to obtain an integrated spectrum for each of a plurality of wind speed measurement sections by integrating the spectra obtained from the plurality of divided reception signals for at least a part of a plurality of the pulses transmitted after the wind speed is calculated in a previous time for each of the plurality of wind speed measurement sections, each of the plurality of wind speed measurement sections being a combination of each of the plurality of beam directions and each of the plurality of time intervals; an SN ratio calculating unit to calculate an SN ratio of the integrated spectrum; a wind speed calculating unit to calculate the wind speed in each of the plurality of wind speed measurement sections from the integrated spectrum having the SN ratio greater than or equal to a first threshold value; and an incoming wind information predicting unit to predict incoming wind information which is information of incoming wind, which is wind arriving at and coming to the wind turbine, based on the wind speed in each of the wind speed measurement sections.

ADVANTAGEOUS EFFECTS OF INVENTION

According to the present disclosure, it is possible to predict incoming wind information being information of the incoming wind being wind arriving at and coming to a wind turbine with higher accuracy than in the prior art.

BRIEF DESCRIPTION OF DRAWINGS

FIG. 1 is a schematic diagram illustrating the configuration of a wind measurement lidar device according to a first embodiment.
FIG. 2 is a schematic diagram when the wind measurement lidar device is mounted on a wind turbine and beams of laser light are transmitted and received in a plurality of beam directions to measure the wind speed at a front position of the wind turbine.
FIG. 3 is a flowchart illustrating the operation of the wind measurement lidar device according to the first embodiment.
FIG. 4 is a flowchart illustrating the optical transmission and reception operation of the wind measurement lidar device according to the first embodiment.
FIG. 5 is a schematic diagram illustrating the configuration of a modification of the wind measurement lidar device according to the first embodiment.
FIG. 6 is a schematic diagram illustrating the configuration of a wind measurement lidar device according to a second embodiment.
FIG. 7 is a schematic diagram illustrating the configuration of a wind measurement lidar device according to a third embodiment.
FIG. 8 is a schematic diagram illustrating the distance for measuring the wind speed in a wind measurement lidar device according to a fourth embodiment.
FIG. 9 is a schematic diagram illustrating the configuration of the wind measurement lidar device according to the fourth embodiment.

FIG. 10 is a schematic diagram illustrating the configuration of a wind measurement lidar device according to a fifth embodiment.

FIG. 11 is a flowchart illustrating the operation of the wind measurement lidar device according to the fifth embodiment.

FIG. 12 is a schematic diagram illustrating the configuration of a wind measurement lidar device according to a sixth embodiment.

FIG. 13 is a flowchart illustrating the operation of the wind measurement lidar device according to the sixth embodiment.

FIG. 14 is a schematic diagram illustrating the configuration of a wind measurement lidar device according to a seventh embodiment.

FIG. 15 is a flowchart illustrating the operation of the wind measurement lidar device according to the seventh embodiment.

FIG. 16 is a schematic diagram illustrating the configuration of a wind measurement lidar device according to an eighth embodiment.

FIG. 17 is a flowchart illustrating the operation of the wind measurement lidar device according to the eighth embodiment.

FIG. 18 is a schematic diagram illustrating the configuration of a wind measurement lidar device according to a ninth embodiment.

FIG. 19 is a flowchart illustrating the operation of the wind measurement lidar device according to the ninth embodiment.

FIG. 20 is a schematic diagram illustrating the configuration of a wind measurement lidar device according to a tenth embodiment.

FIG. 21 is a flowchart illustrating the operation of the wind measurement lidar device according to the tenth embodiment.

FIG. 22 is a schematic diagram illustrating the configuration of a wind measurement lidar device according to an eleventh embodiment.

FIG. 23 is a flowchart illustrating the operation of the wind measurement lidar device according to the eleventh embodiment.

## DESCRIPTION OF EMBODIMENTS

### First Embodiment

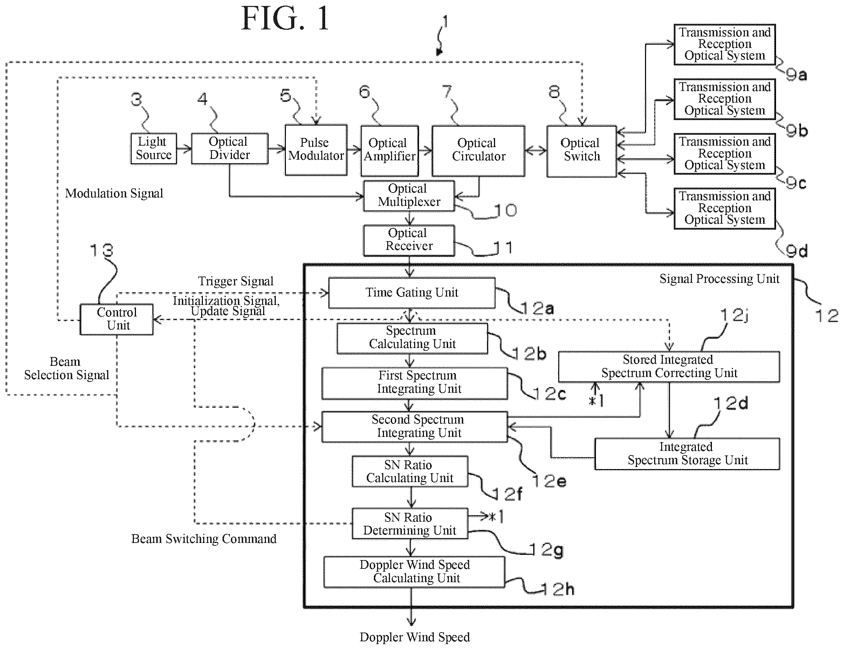

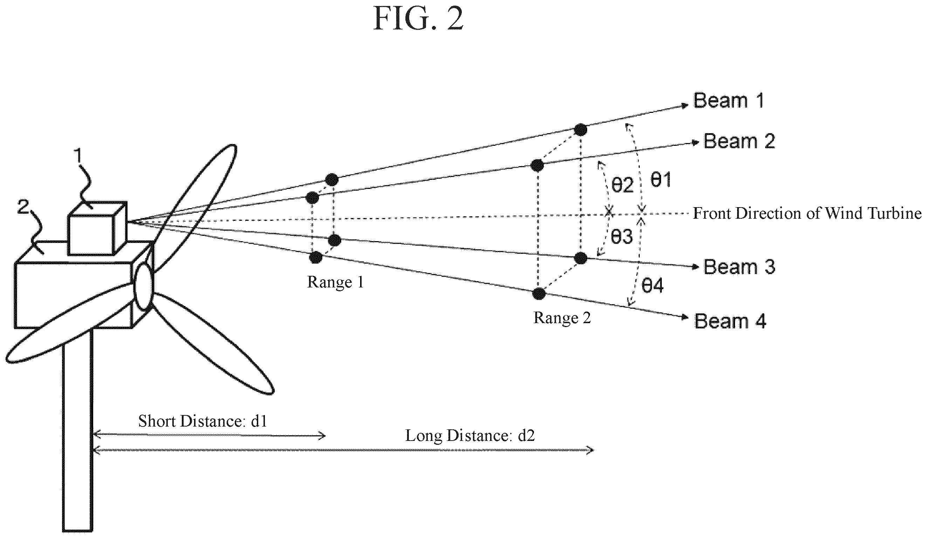

The configuration of a wind measurement lidar device according to a first embodiment is described. FIG. 1 is a schematic diagram illustrating the configuration of the wind measurement lidar device according to the first embodiment. A wind measurement lidar device 1 measures the wind speed of the wind at a front position of and in a front direction of a wind turbine 2 (illustrated in FIG. 2). The wind measurement lidar device 1 mainly includes a light source 3, an optical divider 4, a pulse modulator 5, an optical amplifier 6, an optical circulator 7, an optical switch 8, transmission and reception optical systems 9a, 9b, 9c, and 9d, an optical multiplexer 10, an optical receiver 11, a signal processing unit 12, and a control unit 13.

The wind measurement lidar device 1 includes the four transmission and reception optical systems 9a, 9b, 9c, and 9d. Each of the transmission and reception optical systems 9a, 9b, 9c, and 9d transmits and receives in a beam direction determined with respect to the front direction of the wind turbine 2 for each of the transmission and reception optical systems 9a, 9b, 9c, and 9d. Each of the transmission and reception optical systems 9a, 9b, 9c, and 9d emits transmission light, which is pulse-modulated, into the atmosphere in a predetermined beam direction, and receives reflection light reflected by aerosol in the atmosphere in the beam direction. The aerosol is particles that move together with the atmosphere. The number of transmission and reception optical systems may be two, three, or five or more. Each of the transmission and reception optical systems 9a, 9b, 9c, and 9d transmits and receives a beam of laser light in different beam directions.

The light source 3 oscillates and outputs laser light that is a continuous wave having a single frequency. The optical divider 4 divides the laser light outputted from the light source 3 into two: transmission light and local light. The pulse modulator 5 performs modulation (pulse modulation) on the transmission light inputted from the optical divider 4 and applies a predetermined frequency shift. The pulse modulator 5 generates laser light having an intermediate frequency in coherent detection described later. Examples of the pulse modulator 5 having such a function include acousto-optic frequency shifters. The optical amplifier 6 amplifies the transmission light that is pulse-modulated. The optical circulator 7 outputs the laser light inputted from the optical amplifier 6 to the optical switch 8, and outputs laser light inputted from the optical switch 8 to the optical multiplexer 10. The optical amplifier 6 is necessary for measuring the wind speed at a point farther than a distance at which the wind speed can be measured when the amplification is not performed. When measurement can be performed for a distance to be measured without amplifying the transmission light by the optical amplifier 6, the wind measurement lidar device 1 may not include the optical amplifier 6.

The optical switch 8 selects any one of the four transmission and reception optical systems 9a, 9b, 9c, and 9d and outputs the transmission light by switching the transmission light. The optical switch 8 switches reflection light received by the transmission and reception optical systems 9a, 9b, 9c, and 9d and outputs the reflection light to the optical circulator 7. For example, by selecting the transmission and reception optical systems 9a, 9b, 9c, and 9d in this order, the optical switch 8 transmits and receives laser light in beam directions of, for example, Beam 1 -> Beam 2 -> Beam 3 -> Beam 4 as illustrated in FIG. 2. The order of transmitting and receiving laser light in respective beam directions may not always be the same.

The optical multiplexer 10 combines the local light and reception light (reflection light). The optical receiver 11 detects coherently the laser light combined by the optical multiplexer 10. A signal detected and converted photoelectrically by the optical receiver 11 is sent to the signal processing unit 12 as a reception signal. The signal processing unit 12 calculates the Doppler wind speed for each of the distances from the reception signal. The control unit 13 controls each of the components.

The optical multiplexer 10 and the optical receiver 11 constitute a reception detection unit that detects reflection light obtained for each pulse by combining the reflection light and the local light and performs photoelectric conversion to generate a reception signal.

The signal processing unit 12 includes a time gating unit 12a, a spectrum calculating unit 12b, a first spectrum integrating unit 12c, an integrated spectrum storage unit 12d, a second spectrum integrating unit 12e, an SN ratio calculating unit 12f, an SN ratio determining unit 12g, a Doppler wind speed calculating unit 12h, and a stored integrated spectrum correcting unit 12j.

The time gating unit 12a divides the reception signal inputted from the optical receiver 11 into reception signals that are divided by a time gate. A time gate is a dividing point in time at which a reception signal is divided. The time gating unit 12a determines the timing of a time gate in accordance with a trigger signal inputted from the control unit 13. The trigger signal is generated at timing at which a reference event, such as timing at which transmission of transmission light starts, occurs. A time gate divides a reception signal by the time elapsed from transmission of transmission light. Therefore, the reception signal divided by a time gate is divided in accordance with the distance from the wind measurement lidar device 1. An interval of time divided by the time gate is referred to as a time interval. Time intervals are divided so that a distance from the wind measurement lidar device 1 (strictly speaking, a transmission and reception optical system) can be divided as intended. Each of distance ranges divided by time intervals is referred to as a measurement distance range. A reception signal is divided into a plurality of time intervals, which is referred to as divided reception signals. One divided reception signal corresponds to one measurement distance range. The time gating unit 12a corresponds to a reception signal dividing unit that generates the divided reception signal.

The spectrum calculating unit 12b performs Fourier transform on each of the reception signals (divided reception signals) divided by the time gate and calculates a spectrum of the divided reception signal at each distance. The first spectrum integrating unit 12c integrates spectra calculated by the spectrum calculating unit 12b for each reception signal that is obtained by transmitting pulses of the transmission light and for each time interval. The spectrum integrated by the first spectrum integrating unit 12c is referred to as a first integrated spectrum.

The integrated spectrum storage unit 12d stores a spectrum integrated by repeating transmission of a plurality of times of pulses in the same beam direction zero times or more. The integrated spectrum storage unit 12d has a function of storing spectrum data regarding each beam direction and each distance (A × B pieces of spectrum data when the number of measurement distance ranges is A and the number of beams is B). That is, the integrated spectrum storage unit 12d stores only one piece of spectrum data for each beam direction and each distance. Spectrum data stored in the integrated spectrum storage unit 12d is data of integrated spectra, each of which obtained by integrating a plurality of spectra.

The integrated spectrum storage unit 12d stores an integrated spectrum, obtained by integrating spectra of a plurality of divided reception signals, for each wind speed measurement section. A wind speed measurement section is a combination of a beam direction and a time interval. Meanwhile, the first spectrum integrating unit 12c generates the first integrated spectrum by integrating a plurality of spectra for each wind speed measurement section. The first integrated spectrum is an integrated spectrum obtained by integrating a plurality of spectra for each wind speed measurement section. Each of the plurality of spectra is obtained by performing a Fourier transform on each of a plurality of the divided reception signals having a beam direction and a time interval that are determined by the wind speed measurement section. The plurality of divided reception signals is generated by dividing a plurality of reception signals, each of the plurality of reception signals is obtained from each of a plurality of pulses transmitted in succession in that beam direction.

The second spectrum integrating unit 12e integrates spectra, including a spectrum stored in the integrated spectrum storage unit 12d. The second spectrum integrating unit 12e integrates the first integrated spectrum and an integrated spectrum stored in the integrated spectrum storage unit 12d. The integrated spectrum stored in the integrated spectrum storage unit 12d is referred to as a stored integrated spectrum. A spectrum integrated by the second spectrum integrating unit 12e is referred to as the second integrated spectrum. The second integrated spectrum is an integrated spectrum obtained by integrating a plurality of spectra for each wind speed measurement section. The second integrated spectrum is an integrated spectrum obtained by integrating the stored integrated spectrum and the first integrated spectrum.

The SN ratio calculating unit 12f calculates the SN ratio of the second integrated spectrum integrated by the second spectrum integrating unit 12e. The SN ratio determining unit 12g determines whether or not the SN ratio of the second integrated spectrum is greater than or equal to a first threshold value. The Doppler wind speed calculating unit 12h is a wind speed calculating unit that calculates a Doppler frequency shift and a Doppler wind speed (abbreviated as wind speed) from an integrated spectrum for each wind speed measurement section when the SN ratio of the integrated spectrum is greater than or equal to the first threshold value.

In FIG. 1, optical devices are connected by an optical fiber. Each connection is made by an optical fiber between the light source 3 and the optical divider 4, between the optical divider 4 and each of the pulse modulator 5 and the optical multiplexer 9, between the pulse modulator 5 and the optical amplifier 6, between the optical amplifier 6 and the optical circulator 7, between the optical circulator 7 and the optical switch 8, between the optical switch 8 and each of the four transmission and reception optical systems 9a, 9b, 9c, and 9d, between the optical circulator 7 and the optical multiplexer 10, and between the optical multiplexer 10 and the optical receiver 11. The wind measurement lidar device illustrated in FIG. 1 is a wind measurement lidar device having a so-called optical fiber type circuit configuration; however, it is not particularly necessary to have this configuration.

In FIG. 1, an electrical signal line is provided between devices. Each connection is made by an electrical signal line between the optical receiver 11 and the time gating unit 12a, between the control unit 13 and the pulse modulator 5, between the control unit 13 and the optical switch 8, between the control unit 13 and the time gating unit 12a, between the control unit 13 and the integrated spectrum storage unit 12d, between the control unit 13 and the SN ratio determining unit 12f, and between the control unit 13 and the stored integrated spectrum correcting unit 12j. The optical switch 8 outputs transmission light to any one of the transmission and reception optical systems 9a, 9b, 9c, and 9d based on a beam selection signal from the control unit 13. The optical switch 8 also receives reflection light from any one of the transmission and reception optical systems 9a, 9b, 9c, and 9d based on the beam selection signal from the control unit 13.

The control unit 13 sends the beam selection signal to the optical switch 8. The beam selection signal is a signal for switching the beam direction to another beam direction. When beam selection time, which is time in which pulses of greater than or equal to a predetermined minimum number of pulses are generated in one beam direction, elapses, a beam selection signal is sent to the optical switch 8. The optical switch 8, the transmission and reception optical systems 9a, 9b, 9c, and 9d, and the control unit 13 constitute a beam switching unit that switches the beam direction.

The wind measurement lidar device 1 illustrated in FIG. 1 measures the wind speed by employing a principle, that is, a so-called coherent system. A wind measurement lidar device of a coherent system is disclosed in Non-Patent Literature 1.

The operation of the wind measurement lidar device 1 is described. Here, a case where the wind measurement lidar device 1 is mounted on a nacelle of a wind turbine 2 as illustrated in FIG. 2 is described as an example. The wind measurement lidar device 1 is mounted on a nacelle of the wind turbine 2. The wind measurement lidar device 1 measures the wind speed at a front position in the front direction of the wind turbine 2 and predicts an incoming wind speed (inflow wind speed). The incoming wind is wind that arrives at the wind turbine 2 from the front position in the front direction thereof and rotates the wind turbine 2. The incoming wind speed is a wind speed of the incoming wind. Based on the predicted incoming wind speed, the wind turbine 2 is controlled so as to maximize the power generation amount of the wind turbine 2 or minimize the load on the wind turbine 2. In the example illustrated in FIG. 2, the number of beams of laser light transmitted to and received from the wind measurement lidar device 1 is four including Beam 1, Beam 2, Beam 3, and Beam 4. Each of the beams forms an angle of $\theta1$, $\theta2$, $\theta3$, and $\theta4$ with respect to the front direction of the wind turbine. These beams are transmitted and received in different directions separated from each other. Furthermore, transmission and reception are performed in a switched manner in time-series, for example, in the order of Beam 1, Beam 2, Beam 3, and Beam 4, and wind speeds are measured in a plurality of beam directions and a plurality of distances. The incoming wind speed to the wind turbine 2 is predicted based on the wind speeds in the four directions measured in this manner. Here, it is assumed that the laser light transmitted and received from the transmission and reception optical systems 9a, 9b, 9c, and 9d are Beam 1, Beam 2, Beam 3, and Beam 4 illustrated in FIG. 2, respectively. In each of the beams, the wind speed is measured at two points of a short distance d1 and a long distance d2.

When pulsed transmission light is transmitted into the atmosphere, the transmission light is reflected by aerosol present at different distances from the wind measurement lidar device 1 (strictly speaking, an optical transmission and reception optical system 9) to become reflection light. The reflection light is temporally longer than the transmission light. Reflection light reflected at the short distance d1 is received by an optical transmission and reception optical system 9 earlier than reflection light reflected at the long distance d2. That is, time elapses from transmission of transmission light to reception of reflection light by an optical transmission and reception optical system 9 is proportional to the distance from the optical transmission and reception optical system 9 to the position of the reflection. Dividing a reception signal generated from the reflection light by time means to divide the reception signal depending on a distance from the optical transmission and reception optical system 9 to the position of the reflection.

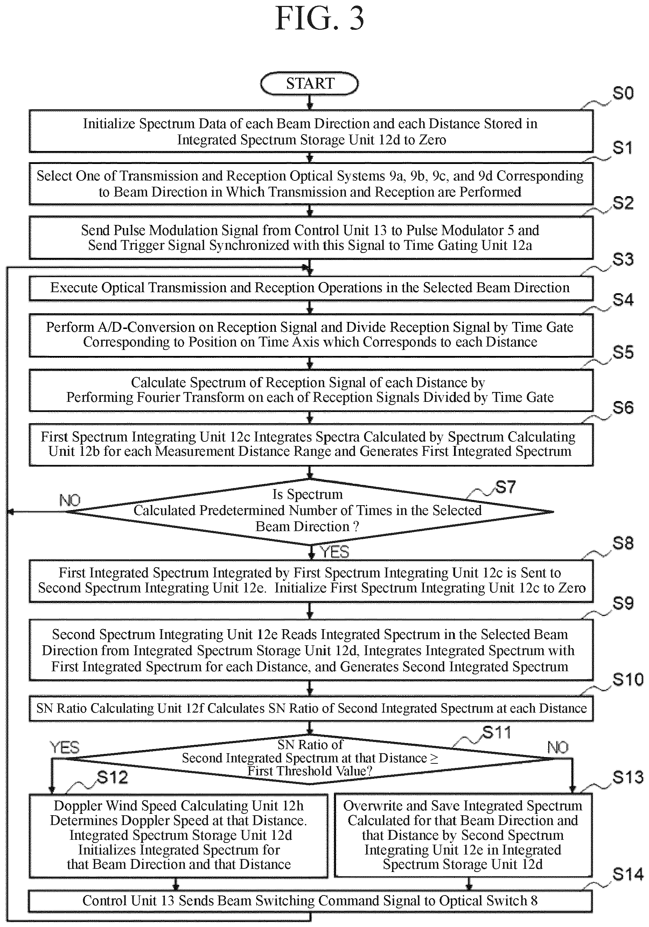

The operation of the wind measurement lidar device 1 is described by referring to FIG. 3. FIG. 3 is a flowchart illustrating the operation of the wind measurement lidar device. First, the control unit 13 sends an initialization signal to the stored integrated spectrum correcting unit 12j. The stored integrated spectrum correcting unit 12j initializes spectrum data regarding each beam direction and each distance stored in the integrated spectrum storage unit 12d to zero (step S0).

Next, the control unit 13 sends a beam selection signal to the optical switch 8 and the second spectrum integrating unit 10e. The optical switch 8 selects one of the transmission and reception optical systems 9a, 9b, 9c, and 9d that corresponds to the beam direction in which a beam of laser light is transmitted and received (step S1).

Next, the control unit 13 sends a pulse modulation signal to the pulse modulator 5 and sends a trigger signal synchronized with this signal to the time gating unit 12a (step S2).

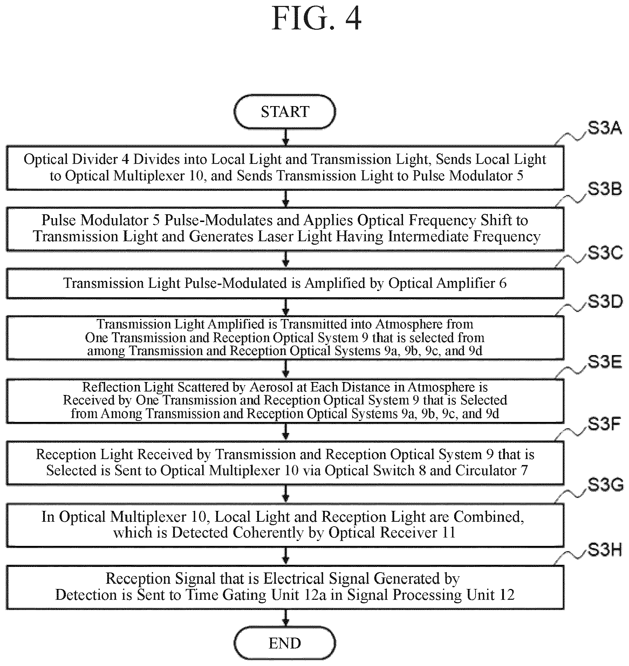

In a state where such an operation is performed, the following optical transmission and reception operation (step S3) is executed. A reception signal generated by the optical transmission and reception operation is sent to the time gating unit 12a of the signal processing unit 12. The optical transmission and reception operation is described by referring to FIG. 4. FIG. 4 is a flowchart illustrating the optical transmission and reception operation of the wind measurement lidar device.

First, laser light which is a continuous wave from the light source 3 is divided into local light and transmission light by the optical divider 4. The local light is sent to the optical multiplexer 10, and the transmission light is sent to the pulse modulator 5 (step S3A). The pulse modulator 5 pulse-modulates and applies a frequency shift to the transmission light and generates laser light having an intermediate frequency in coherent detection (step S3B). The transmission light that is pulse-modulated is amplified by the optical amplifier 6 (step S3C). The transmission light that is amplified is transmitted into the atmosphere from one transmission and reception optical system 9 that is selected, from among the transmission and reception optical systems 9a, 9b, 9c, and 9d, by the optical switch 8 in accordance with the control signal from the control unit 13 (step S3D). The transmission light is transmitted into the atmosphere through a route via the light source 3, the optical divider 4, the pulse modulator 5, the optical amplifier 6, the optical circulator 7, the optical switch 8, and a transmission and reception optical system 9.

The transmission light is scattered (reflected) by the aerosol at each distance in the atmosphere while being subjected to a Doppler frequency shift corresponding to the wind speed. The scattered (reflected) laser light is received by one transmission and reception optical system 9 that is selected from among the transmission and reception optical systems 9a, 9b, 9c, and 9d (step S3E). Reception light (reflection light) received by the selected transmission and reception optical system 9 is sent to the optical multiplexer 10 via the optical switch 8 and the optical circulator 7 (step S3F). In the optical multiplexer 10, the local light and the reception light (reflection light) are combined. The combined reflection light is detected coherently by the optical receiver 11 (step S3G). The reception signal that is an electrical signal generated by detection is sent to the time gating unit 12a in the signal processing unit 12 (step S3H).

The signal processing unit 12 performs A/D conversion in synchronization with a trigger signal from the control unit 13 to the time gating unit 12a to convert the reception signal into a digital signal. The time gating unit 12a divides the reception signal that is a digital signal by a time gate corresponding to a position on the time axis which corresponds to each distance (measurement distance range) (step S4). A measurement distance range corresponds to a time interval. The measurement distance range is also referred to as a distance range.

Next, the spectrum calculating unit 12b calculates the spectrum of a divided reception signal corresponding to each distance by performing Fourier transform on each of the plurality of divided reception signals which is respective reception signals divided by the time gate (step S5).

The first spectrum integrating unit 12c integrates the spectra calculated by the spectrum calculating unit 12b for each measurement distance range (step S6). Whether or not the spectrum is calculated a predetermined number of times in the selected beam direction is checked (step S7). If the spectrum is not calculated the predetermined number of times (NO in S7), the process returns to S3.

If the spectrum is calculated the predetermined number of times (YES in S7), the first integrated spectrum integrated by the first spectrum integrating unit 12c is sent to the second spectrum integrating unit 12e. The integrated spectrum remaining in the first spectrum integrating unit 12c after the transmission is initialized to zero (step S8). In the operation of S8, the data stored in the integrated spectrum storage unit 12d is not changed.

Instead of the number of times a spectrum is calculated in a beam direction, at the time point when the time, while the transmission and reception optical system 9 corresponding to one beam direction is selected, reaches or exceeds beam selection time, the integration of the first integrated spectrum by the first spectrum integrating unit 12c may be terminated, and integration of spectra by the second spectrum integrating unit 12e may be performed. The beam selection time is the time while greater than or equal to a predetermined minimum number of pulses are generated. The minimum number of pulses is determined such that the SN ratio of an integrated spectrum integrated at least for a wind speed measurement section corresponding to the shortest distance is greater than or equal to the first threshold value in all beam directions.

The beam selection time while a beam direction is selected and the number of pulses generated in a beam direction (the number of generated pulses) may not always be constant. A lower limit value for the beam selection time or the number of generated pulses is required to be set so that pulses greater than or equal to the minimum number of pulses are generated. An upper limit value may be set, and the beam selection time may be caused to be changed so as to be less than or equal to the upper limit value. The upper limit value of the beam selection time may be set to be less than or equal to the longest cycle in which the wind speed at the shortest distance is measured. The longest cycle may be set depending on an update rate of the wind speed at a short distance.

Next, the second spectrum integrating unit 12e reads a stored integrated spectrum corresponding to the selected beam direction and the selected distance from among the integrated spectra stored in the integrated spectrum storage unit 12d for each distance and each beam direction. Then, the second spectrum integrating unit 12e further integrates the integrated spectrum read from the integrated spectrum storage unit 12d and the integrated spectrum integrated by the first spectrum integrating unit 12c in S8 for each distance (step S9). The integrated spectrum generated in S9 is the second integrated spectrum.

Next, the SN ratio calculating unit 12f calculates the SN ratio of the integrated spectrum at each distance from the peak of the integrated spectrum obtained in S9 and the noise level (step S10).

Next, the SN ratio determining unit 12g compares the SN ratio of the integrated spectrum at each distance that is calculated in S10 with the predetermined first threshold value for each distance (step S11).

With respect to the distance at which the SN ratio of the integrated spectrum is greater than or equal to the first threshold value (YES in S11), in step S12, the Doppler wind speed calculating unit 12h determines the Doppler frequency shift from the peak frequency of the spectrum obtained in S9 and determines the Doppler wind speed (wind speed) with a calculation equation determined from the Doppler frequency shift. Furthermore, the control unit 13 sends an initialization signal to the stored integrated spectrum correcting unit 12j. The stored integrated spectrum correcting unit 12j initializes (resets to zero) the values of spectrum data stored in the integrated spectrum storage unit 12d for the beam direction and the distance (wind speed measurement section) for which the wind speed is calculated. In the wind measurement lidar device 1, when the SN ratio of the second integrated spectrum is greater than or equal to the first threshold value in each wind speed measurement section, the wind speed is calculated from the second integrated spectrum.

Regarding a distance at which the SN ratio of the integrated spectrum is not greater than or equal to the first threshold value (NO in S11), the control unit 13 sends an update signal to the stored integrated spectrum correcting unit 12j. The stored integrated spectrum correcting unit 12j receiving the update signal overwrites and saves the spectrum data integrated by the second spectrum integrating unit 12e in S9 in the integrated spectrum storage unit 12d as the integrated spectrum of the corresponding wind speed calculation section (step S13). That is, when the Doppler wind speed calculating unit 12h does not calculate the Doppler wind speed, the stored integrated spectrum correcting unit 12j stores the second integrated spectrum into the integrated spectrum storage unit 12d.

The control unit 13 sends a beam switching command signal to the optical switch 8 (step S14). It is only required that S14 be performed after YES in S7 and before S3 is executed.

By causing operation as in S0 to S14, the wind speed can be measured for the long distance with a low SN ratio in the spectrum of a reception signal. Furthermore, unlike in the prior art, only spectra obtained from pulses transmitted and received in a beam direction can be integrated. Spectra obtained from pulses in different beam directions are not mixed upon integration of spectra. Therefore, the wind measurement lidar device 1 can measure the wind speed in each direction and at each distance with high accuracy. In addition, since the time for beam direction switching itself is not long, the measurement rate does not decrease particularly in a short distance range in which a higher SN ratio is expected.

In the wind measurement lidar device 1, the number of beams is four, and the number of distance ranges for measuring the wind speed is two. It is only required that both the number of beams and the number of distance ranges be any number greater than or equal to two.

The effects achieved by the wind measurement lidar device 1 are particularly effective when this device is mounted on a wind turbine and the incoming wind speed is predicted. Since a wind field at a short distance arrives in a short time, it is necessary to measure the wind speed at a short distance in short cycles. The wind measurement lidar device 1 can measure the wind speed at a short distance in short cycles. Since a distant wind field takes time to arrive, the demand for measuring in short cycles is not high; however, it is necessary to obtain information of the wind speed certainly with a required accuracy. The wind measurement lidar device 1 can measure the wind speed certainly with a required accuracy at the long distance.

In the wind measurement lidar device 1, the number of transmission and reception optical systems is equal to the number of beam directions (In the example illustrated in FIG. 2, the number of transmission and reception optical systems is four, and the number of beam directions is four.). It is possible to have a single transmission and reception optical system by using a transmission and reception optical system of a type in which beams are transmitted and received in a plurality of directions (beam directions) by one series of optical systems disclosed in Patent Literature 2 as the transmission and reception optical system. That is, in a wind measurement lidar device according to the present disclosure, it is required that the number of beam directions be plural, whereas the number of transmission and reception optical systems is not necessarily plural. A plurality of transmission and reception optical systems of a type that transmits and receives beams in a plurality of directions may be used.

The wind measurement lidar device is mounted on a wind turbine and transmits transmission light, which is pulsed laser light, into the atmosphere in a plurality of beam directions determined with respect to a front direction of the wind turbine and measures the wind speed at each of a plurality of distances from the wind turbine in each of the beam directions from a Doppler frequency shift of reflection light, which is the transmission light reflected by particles moving together with the atmosphere, with respect to the transmission light.

Modification

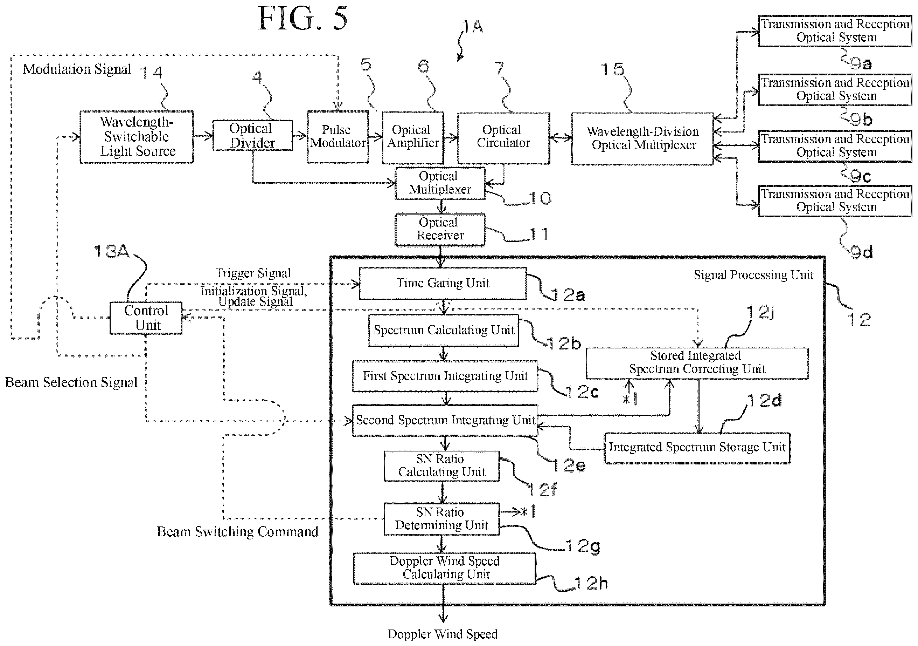

As another method of selecting a direction (beam direction) in which a beam of laser light is transmitted and received, a configuration illustrated in FIG. 5 may be used.

FIG. 5 is a schematic diagram illustrating the configuration of a modification of the wind measurement lidar device. Differences between FIG. 5 and FIG. 1 are described. A wind measurement lidar device 1A includes a wavelength-switchable light source 14 instead of the light source 3 and a wavelength-division optical multiplexer 15 instead of the optical switch 8. In addition to the function of the light source 3, the wavelength-switchable light source 14 can output laser lights of four types of wavelengths $\lambda1$, $\lambda2$, $\lambda3$, and $\lambda4$. Based on the wavelength selection signal from a control unit 13A, the wavelength-switchable light source 14 outputs a laser light of an instructed wavelength. The wavelength-division optical multiplexer 15 has four input and output ports and switches ports for outputting a laser light depending on the wavelength of a laser light inputted thereto. The number of wavelengths may not be four. The wavelength-switchable light source only is required to output laser lights having a plurality of different wavelengths.

Variables $\lambda1$, $\lambda2$, $\lambda3$, and $\lambda4$ are used to express wavelengths of laser lights outputted from the wavelength-switchable light source 14. The wavelengths of laser lights outputted to the respective ports of the wavelength-division optical multiplexer 15 are set to $\lambda1$, $\lambda2$, $\lambda3$, and $\lambda4$, which are equal to the wavelengths of the laser lights that the wavelength-switchable light source 14 outputs. Furthermore, any one of the transmission and reception optical systems 9a, 9b, 9c, and 9d is connected to one of the ports. With these arrangements, it is possible to select a port from which the wavelength-division optical multiplexer 15 outputs a laser light, that is, a beam direction by switching the wavelength selection signal to be sent from the control unit 13 to the wavelength-switchable light source 14. If the other operations are equal to those in FIG. 1, the same operations as those of the wind measurement lidar device in FIG. 1 can be performed to obtain the same effects.

In general, there is an upper limit number of times for switching the optical switch. There are cases where the lifetime of the entire device is determined when the number of times of switching of an optical switch reaches the upper limit number of times. If the configuration including the wavelength-switchable light source 14 and the wavelength-division optical multiplexer 15 is used instead of the optical switch, the problem of the life of optical switches can be moderated, thereby contributing to extension of the life of the entire device.

The first spectrum integrating unit 12c and the second spectrum integrating unit 12e constitute a spectrum integrating unit to generate a second integrated spectrum obtained by integrating, for each wind speed measurement section, a plurality of the spectra each calculated from a plurality of the divided reception signals obtained by dividing each of a plurality of reception signals obtained from a plurality of the pulses transmitted in succession in a beam direction and an integrated spectrum stored in the integrated spectrum storage unit 12d or generating the first integrated spectrum obtained by integrating, for each wind speed measurement section, the second integrated spectrum and a plurality of spectra each calculated from a plurality of divided reception signals obtained by dividing a plurality of reception signals obtained from a plurality of pulses transmitted in succession in a beam direction. The first spectrum integrating unit may read the integrated spectrum stored in the integrated spectrum storage unit 12d before starting the integration and integrate the spectra of the divided reception signals with the integrated spectrum that is read. In that modification, the first spectrum integrating unit 12c serves as a spectrum integrating unit to generate the second integrated spectrum, and thus the second spectrum integrating unit is not necessary.

In the wind measurement lidar device 1, the wind speed is not calculated from the first integrated spectrum; however, the wind speed may be calculated from the first integrated spectrum in which the SN ratio is greater than or equal to the first threshold value. An integrated spectrum to be compared with the first threshold value is the second integrated spectrum in the wind measurement lidar device 1. The SN ratio of the first integrated spectrum may be compared with the first threshold value, and the SN ratio of the second integrated spectrum may be compared with the first threshold value when the SN ratio of the first integrated spectrum is not greater than or equal to the first threshold value. The order may be reversed, and the SN ratio of the second integrated spectrum may be compared with the first threshold value, and the SN ratio of the first integrated spectrum may be compared with the first threshold value when the SN ratio of the second integrated spectrum is not greater than or equal to the first threshold value. A higher SN ratio integrated spectrum, which is either one of the first integrated spectrum or the second integrated spectrum that has a higher SN ratio, may be compared with the first threshold value, and the wind speed may be calculated from the higher SN ratio integrated spectrum that is greater than or equal to the first threshold value.

The reason why there are cases where the SN ratio of the first integrated spectrum is greater than the SN ratio of the second integrated spectrum is that a situation occurs in which the beam is blocked by the blades of the wind turbine and a reception signal cannot be obtained. In such a situation, in a pulse reflected by the blades, there is no component in the reception signal that is generated from reflection light reflected by the aerosol. The first integrated spectrum obtained by integrating spectra of the reception signal obtained from the pulse blocked by the blades has a low SN ratio. In the wind measurement lidar device 1, the first integrated spectrum having an SN ratio that is not greater than or equal to the first threshold value is integrated with the stored integrated spectrum stored in the integrated spectrum storage unit 12d by the second spectrum integrating unit 12e to generate the second integrated spectrum. The second integrated spectrum is stored in the integrated spectrum storage unit 12d.

A reception signal obtained from a pulse blocked by a blade is referred to as a reception signal with blocking. The reception signal obtained from a pulse not blocked by the blades is referred to as a reception signal without blocking. The first integrated spectrum integrated while including a spectrum of a reception signal with blocking is referred to as a first integrated spectrum with blocking. The first integrated spectrum obtained by integrating only spectra of reception signals with blocking is referred to as a first integrated spectrum with complete blocking. The first integrated spectrum including both the spectrum of a reception signal with blocking and the spectrum of a reception signal without blocking is referred to as a first integrated spectrum with partial blocking. The first integrated spectrum obtained by integrating only spectra of reception signals without blocking is referred to as the first integrated spectrum without blocking. It is assumed that the SN ratio of the first integrated spectrum without blocking is the first threshold value.

Suppose a situation in which several first integrated spectra with blocking are generated in succession, the SN ratio of the stored integrated spectrum decreases in a range less than the first threshold value. And after that, the first integrated spectrum without blocking is generated in the beam direction in which the integrated spectrum in which the SN ratio is decreased is stored. The SN ratio of the first integrated spectrum without blocking is the first threshold value. Meanwhile, the second integrated spectrum is generated by integration of the stored integrated spectrum that is less than the first threshold value with the first integrated spectrum. Therefore, the SN ratio of the second integrated spectrum is less than the first threshold value. In this situation, the SN ratio of the first integrated spectrum is greater than the SN ratio of the second integrated spectrum.

The spectrum integrating unit is required to be able to determine an integrated spectrum obtained by integrating at least a part of spectra (referred to as spectra generated after previous-time) obtained from divided reception signals of a plurality of pulses transmitted after the previous calculation of the wind speed for each wind speed measurement section that is a combination of a beam direction and a time interval. The integrated spectrum may be the whole or a part of the spectra generated after previous-time. The stored integrated spectrum stored in the integrated spectrum storage unit may be the whole or a part of the spectra generated after previous-time. The first integrated spectrum and the second integrated spectrum are integrated spectra obtained by integrating at least a part of the spectra generated after previous-time for each wind speed measurement section.

In the wind measurement lidar device 1, the SN ratio determination is performed for each beam. Regarding the spectrum data at each distance obtained by the second spectrum integrating unit 12e, regarding beams for measuring the wind speed at the same altitude, whether or not the SN ratio exceeds the first threshold value may be determined for all of these beams at each distance. That is, when the SN ratio of an integrated spectrum is greater than or equal to the first threshold value in all of a plurality of wind speed measurement sections at the same distance and at the same altitude, the Doppler wind speed calculating unit may calculate the wind speed in all of the plurality of wind speed measurement sections at the same distance and at the same altitude. When there is the wind speed measurement section in which the SN ratio of an integrated spectrum is not greater than or equal to the first threshold value among a plurality of wind speed measurement sections at the same distance and at the same altitude, the wind speed is calculated in none of the plurality of wind speed measurement sections at the same distance and at the same altitude. Specifically, in FIG. 2, it is determined whether or not the SN ratio is greater than or equal to the first threshold value in both Beam 1 and Beam 2. When the SN ratio is greater than or equal to the first threshold value in both Beam 1 and Beam 2, the wind speed is measured for Beam 1 and Beam 2 at that distance. Furthermore, it is determined whether or not the SN ratio is greater than or equal to the first threshold value in both Beam 3 and Beam 4. When the SN ratio is greater than or equal to the first threshold value in both Beam 3 and Beam 4, the wind speed is measured for Beam 3 and Beam 4 at that distance. This makes it possible to equalize the time required for wind speed measurement at each altitude at each distance.

When integrated spectra satisfy the condition for calculating the wind speed in all of the plurality of wind speed measurement sections at the same distance and at the same altitude, the wind speeds in all of the plurality of wind speed measurement sections at the same distance and at the same altitude are calculated.

Regarding the determination as to whether or not the SN ratio of an integrated spectrum is greater than or equal to the first threshold value, the number of times of storing the integrated spectrum into the integrated spectrum storage unit 12d is counted when the SN ratio is less than the first threshold value. When the counted number reaches a predetermined maximum value, the counted number may be reset to zero, and the integrated spectrum stored in the integrated spectrum storage unit 12d may be initialized. In this method, a significant decrease in measurement accuracy due to an excessive measurement time of wind speed measurement can be moderated. Here, when the SN ratio of the integrated spectrum does not reach a required SN ratio and the counted number reaches the maximum value, the fact that the wind speed measurement cannot be performed is outputted as data. The required SN ratio is the first threshold value to be compared with the SN ratio of an integrated spectrum.

In addition, in the wind measurement lidar device, a situation occurs in which the SN ratio of the integrated spectrum in some beam direction does not reach the required SN ratio when beams are scanned once, that is, for example, each of the beams are measured once such as Beam 1 -> Beam 2 -> Beam 3 -> Beam 4. In this situation, for data of a beam in which the SN ratio of the integrated spectrum does not reach the required SN ratio, a flag indicating that integration is being carried out is outputted. In addition, since performing integration for excessively long time leads to significant deterioration in the measurement accuracy of the wind speed, an upper limit number of times is determined for the number of times of scanning used for integration, that is, the number of times of measuring the beam direction (the number of times of successive integration). The number of times of successive integration is the number of times of integration indicating how many first integrated spectra are integrated to generate an integrated spectrum. When the SN ratio of the integrated spectrum does not reach the required SN ratio after the first integrated spectra are integrated up to the upper limit number of times, a flag indicating that wind speed measurement is difficult is outputted as data. In addition to the calculation result of the wind speed and the SN ratio at the time of calculation, data of the two types of flags described above (that integration is being carried out and that wind speed measurement is difficult) is outputted for each scanning. Furthermore, the number of times of scanning used for integration (what number of times of scanning is currently performed with respect to the upper limit number of times) is outputted for each scanning. With this arrangement, the measurement result in the wind measurement lidar device can be utilized in real time.

When the upper limit number of times of scanning is set, the stored integrated spectrum correcting unit operates as follows. For the wind speed measurement section in which the SN ratio of an integrated spectrum is less than the first threshold value, the stored integrated spectrum correcting unit stores the integrated spectrum integrated by the second spectrum integrating unit into the integrated spectrum storage unit when the number of times of successive integration, which is the number of times an integrated spectrum is stored in the integrated spectrum storage unit after initialization of the integrated spectrum storage unit, is less than the upper limit number of times. When the number of times of successive integration is greater than or equal to the upper limit number of times, the stored integrated spectrum correcting unit initializes the integrated spectrum stored in the integrated spectrum storage unit.

The above also applies to other embodiments.

Instead of always generating the second integrated spectrum, the second integrated spectrum may be generated when the SN ratio of the first integrated spectrum is greater than or equal to a second threshold value. The second threshold value is determined to be smaller than the first threshold value. The second threshold value is determined, for example, so that spectra generated from reception signals without blocking are included to some extent (for example, 20% or more) in the first integrated spectrum. Alternatively, the second threshold value is determined in such a manner that, for example, a value corresponding to 5% from the lower side among calculated values of the SN ratios of first integrated spectra. The second threshold value is determined so as not to use, for integration, the first integrated spectrum which decreases the SN ratio by integrating it with high probability. The ratio of the spectra generated from reception signals without blocking in first integrated spectrum is referred to as a non-blocking rate.

Whether or not to generate the second integrated spectrum may be determined for each beam direction instead of determining for each wind measurement period. For example, a determination target wind speed measurement section is used in order to determine whether or not to generate the second integrated spectrum for each beam direction. The determination target wind speed measurement section is one or more of wind speed measurement sections determined in advance for each beam direction. When the number of wind speed measurement sections which belongs to the determination target wind speed measurement section and in which the SN ratio of the first integrated spectrum is greater than or equal to the second threshold value is greater than or equal to the lower limit number, the second integrated spectrum is generated. Otherwise, no second integrated spectrum is generated. The wind speed measurement section which belongs to the determination target wind speed measurement section and in which the SN ratio of the first integrated spectrum is greater than or equal to the second threshold value is referred to as a valid SN ratio wind speed measurement section.

Even when the second integrated spectrum is generated in a beam direction, the second integrated spectrum may not be generated for the wind speed measurement section in which the SN ratio of the first integrated spectrum is extremely low. For example, for the wind speed measurement section in which the SN ratio is lower than a third threshold value that is determined to be smaller than the second threshold value, and which has the beam direction is determined to generate the second integrated spectrum, the second integrated spectrum may not be generated for that wind speed measurement section. The second integrated spectrum is generated in a beam direction in which the number of valid SN ratio wind speed measurement sections is greater than or equal to the lower limit number and for the wind speed measurement section in which the SN ratio of the first integrated spectrum is greater than or equal to the third threshold value. No second integrated spectrum is generated in any wind speed measurement section in a beam direction in which the number of valid SN ratio wind speed measurement sections is not greater than or equal to the lower limit number. No second integrated spectrum is generated for the wind speed measurement section in which the number of valid SN ratio wind speed measurement sections is greater than or equal to the lower limit number but the SN ratio of the first integrated spectrum is not greater than or equal to the third threshold value. The third threshold value is determined to be, for example, a half of the second threshold value. The third threshold value is determined so as not to use, for integration, the first integrated spectrum, integration with which certainly decreases the SN ratio.

When the SN ratio of the first integrated spectrum is not greater than or equal to the second threshold value, the second integrated spectrum is generated, however, the second integrated spectrum may not be stored in the integrated spectrum storage unit 12d. Even when it is determined whether or not to generate the second integrated spectrum based on the number of valid SN ratio wind speed measurement sections in the determination target wind speed measurement section for each beam direction, the second integrated spectrum is generated when the conditions for not generating the second integrated spectrum are satisfied, however, the second integrated spectrum may not be stored in the integrated spectrum storage unit 12d.

When the SN ratio of the second integrated spectrum is not greater than or equal to a fourth threshold value, the second integrated spectrum may not be stored in the integrated spectrum storage unit 12d. The fourth threshold value is determined to be smaller than the first threshold value. The fourth threshold value may be equal to or different from the second threshold value.

When the SN ratio of the first integrated spectrum is not greater than or equal to the second threshold value (represented by variable k2) and no second integrated spectrum is generated, or when the second integrated spectrum is not stored in the integrated spectrum storage unit 12d, the lower limit value of the SN ratio (represented by variable Zh) of the stored integrated spectrum stored in the stored spectrum storage unit 12d increases as the number of times of integration of first integrated spectra increases. Assuming that the number of times of integration is N,

$$Zh \geq \sqrt{(N)} * k_2 \text{ holds.}$$

When the SN ratio of the second integrated spectrum is not greater than or equal to the fourth threshold value (represented by variable k4) and the second integrated spectrum is not stored in the integrated spectrum storage unit 12d, the lower limit value of the SN ratio Zh of the stored integrated spectrum does not increase as the number of times of integration N increases. Regardless of N, $Zh \geq k4$ holds.

Rather than always storing the second integrated spectrum into the integrated spectrum storage unit 12d in order not to lower the SN ratio of the stored integrated spectrum stored in the integrated spectrum storage unit 12d, the second integrated spectrum may be stored in the integrated spectrum storage unit 12d only when the SN ratio of the second integrated spectrum is greater than the SN ratio of the stored integrated spectrum stored in the integrated spectrum storage unit 12d.

The higher SN ratio integrated spectrum, which is either one of the first integrated spectrum or the second integrated spectrum having a higher SN ratio, may be stored in the integrated spectrum storage unit 12d. Only when the SN ratio of the higher SN ratio integrated spectrum is greater than the SN ratio of the stored integrated spectrum, the higher SN ratio integrated spectrum may be stored in the integrated spectrum storage unit 12d.

An integrated spectrum used to calculate the wind speed for each wind speed measurement section may be determined by any one of the following methods or other methods.

(Method of Determining Integrated Spectrum Used to Calculate Wind Speed)

(a1) A method in which only the SN ratio of the second integrated spectrum is compared with the first threshold value, and the SN ratio of the second integrated spectrum is greater than or equal to the first threshold value.

(a2) A method in which the SN ratio of the first integrated spectrum is compared with the first threshold value at first, and the SN ratio of the first integrated spectrum is greater than or equal to the first threshold value.

(a3) A method in which the SN ratio of the first integrated spectrum is compared with the first threshold value at first, and the SN ratio of the first integrated spectrum is less than the first threshold value, and the SN ratio of the second integrated spectrum is greater than or equal to the first threshold value.

(a4) A method in which the SN ratio of the second integrated spectrum is compared with the first threshold value at first, and the SN ratio of the second integrated spectrum is greater than or equal to the first threshold value.

(a5) A method in which he SN ratio of the second integrated spectrum is compared with the first threshold value at first, and the SN ratio of the second integrated spectrum is less than the first threshold value, and the SN ratio of the first integrated spectrum is greater than or equal to the first threshold value.

(a6) A method in which the higher SN ratio integrated spectrum is determined by comparing the SN ratios of the first integrated spectrum and the second integrated spectrum, and the SN ratio of the higher SN ratio integrated spectrum is greater than or equal to the first threshold value.

Whether the second integrated spectrum is generated or not may be determined by any one of the following methods or other methods. A valid SN ratio wind speed measurement section is a wind speed measurement section which belongs to the determination target wind speed measurement section and in which the SN ratio of the first integrated spectrum is greater than or equal to the second threshold value.

(Method for Determining of Generating Second Integrated Spectrum)

(b1) The second integrated spectrum is always generated.

(b2) When the SN ratio of the first integrated spectrum is greater than or equal to the second threshold value, the second integrated spectrum is generated.

(b3) When the number of valid SN ratio wind speed measurement sections is greater than or equal to the predetermined lower limit number in each beam direction, the second integrated spectrum is generated in each of the wind speed measurement sections in that beam direction.

(b4) When the number of valid SN ratio wind speed measurement sections is greater than or equal to the predetermined lower limit number in each beam direction, the second integrated spectrum is generated for the wind speed measurement section in which the SN ratio of the first integrated spectrum in that beam direction is greater than or equal to the third threshold value.

The methods (b2) to (b4) in which no second integrated spectrum may be generated can be combined with any one of the methods (a1) to (a6). When the SN ratio of the first integrated spectrum is not greater than or equal to the second threshold value, none of the SN ratios of the first integrated spectrum and the second integrated spectrum is greater than or equal to the first threshold value. Therefore, the wind speed cannot be calculated by any one of the methods (a1) to (a6) regardless of whether or not the second integrated spectrum is generated.

For the wind speed measurement section in which the wind speed cannot be calculated, the integrated spectrum to be stored in the integrated spectrum storage unit may be determined by any one of the following methods or other methods. Here, the integrated spectrum that is stored in the integrated spectrum storage unit before the first integrated spectrum is generated for this time is referred to as a previously-stored integrated spectrum.

(Method of Determining Integrated Spectrum to be Stored in Integrated Spectrum Storage Unit)

(c1) The second integrated spectrum is always stored.

(c2) The higher SN ratio integrated spectrum is always stored.

(c3) Either the previously-stored integrated spectrum or the second integrated spectrum that has a higher SN ratio is stored.

(c4) Either the previously-stored integrated spectrum or the higher SN ratio integrated spectrum that has a higher SN ratio is stored.

(c5) The second integrated spectrum is stored. When no second integrated spectrum is generated, the previously-stored integrated spectrum is stored.

(c6) The higher SN ratio integrated spectrum is stored. When no second integrated spectrum is generated, the previously-stored integrated spectrum is stored.

(c7) When the SN ratio of the first integrated spectrum is greater than or equal to the second threshold value, the second integrated spectrum is stored. When the SN ratio of the first integrated spectrum is not greater than or equal to the second threshold value, the previously-stored integrated spectrum is stored.

(c8) When the number of valid SN ratio wind speed measurement sections is greater than or equal to the predetermined lower limit number in each beam direction, the second integrated spectrum is stored in each wind speed measurement section in that beam direction. When the number of valid SN ratio wind speed measurement sections is not greater than or equal to the lower limit number, the previously-stored integrated spectrum is stored in each wind speed measurement section in that beam direction.

(c9) When the number of valid SN ratio wind speed measurement sections is greater than or equal to the predetermined lower limit number in each beam direction, and for the wind speed measurement section in which the SN ratio of the first integrated spectrum in that beam direction is greater than or equal to the third threshold value, the second integrated spectrum is stored. When the number of valid SN ratio wind speed measurement sections is not greater than or equal to the lower limit number, the previously-stored integrated spectrum is stored in each wind speed measurement section in that beam direction. When the number of valid SN ratio wind speed measurement sections is greater than or equal to the lower limit number, for the wind speed measurement section in which the SN ratio of the first integrated spectrum is not greater than or equal to the third threshold value, the previously-stored integrated spectrum is stored.

(c10) When the SN ratio of the second integrated spectrum is greater than or equal to the fourth threshold value, the second integrated spectrum is stored. When the SN ratio of the second integrated spectrum is not greater than or equal to the fourth threshold value, or when no second integrated spectrum is generated, the previously-stored integrated spectrum is stored.

The method (c5) or (c6) is used in combination with any one of the methods (b2) to (b4). In any one of the methods (c7) to (c10), the second integrated spectrum is generated but not stored in the integrated spectrum storage unit. Therefore, any one of the methods (c7) to (c10) is used in combination with the method (b1).

The wind measurement lidar device 1 uses the methods (a1), (b1), and (c1).

In a wind measurement lidar device, a wind measurement lidar device using at least one of the methods (a2) to (a6), the methods (b2) to (b4), and the methods (c2) to (c10) can obtain at least one of the following effects.

(Effect 1) The SN ratio of an integrated spectrum used to calculate the wind speed can be made higher than that in the wind measurement lidar device 1.

(Effect 2) The number of first integrated spectra generated necessary for calculating the wind speed can be reduced as compared to that in the wind measurement lidar device 1.

The above also applies to other embodiments.

Second Embodiment

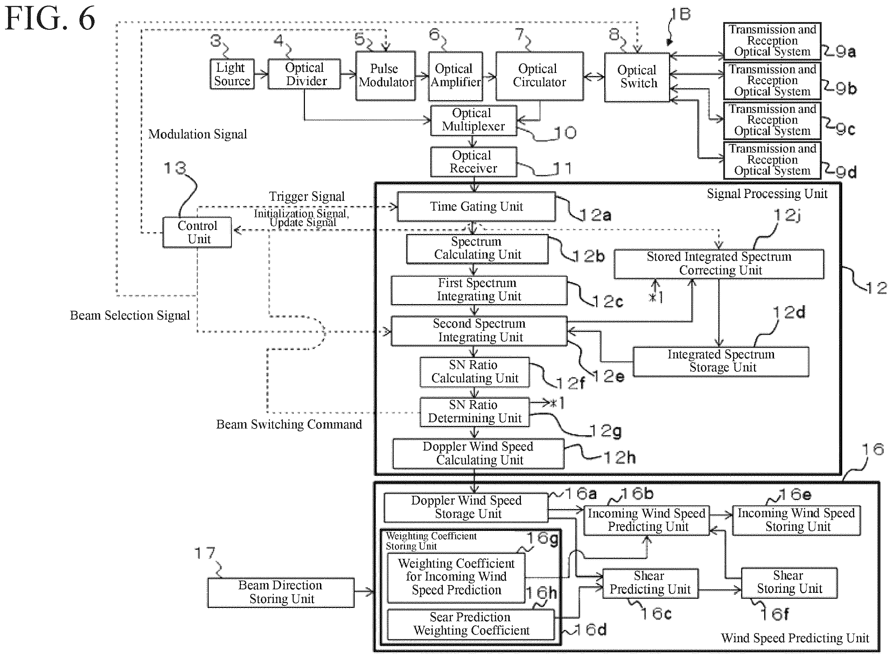

A second embodiment is an embodiment in which the first embodiment is modified so that the wind speed and the shear of an incoming wind of a wind turbine are predicted. A shear is a rate of change in the altitude direction (up-down direction) of a value of a component of the wind speed in the front direction of a wind turbine (referred to as wind turbine front wind speed). FIG. 6 is a schematic diagram illustrating the configuration of a wind measurement lidar device according to the second embodiment. In FIG. 6, points that are different from FIG. 1 of the first embodiment are described.

A wind measurement lidar device 1B includes a wind speed predicting unit 16 and a beam direction storing unit 17. The wind speed predicting unit 16 predicts the wind speed and the shear of the incoming wind of the wind turbine based on the wind speed (Doppler wind speed) calculated by the signal processing unit 12. The wind speed predicting unit 16 is an incoming wind information predicting unit that predicts incoming wind information that is information of incoming wind that is wind arriving at and coming to the wind turbine. The wind speed predicting unit 16 mainly includes a Doppler wind speed storage unit 16a, an incoming wind speed predicting unit 16b, a shear predicting unit 16c, a weighting coefficient storing unit 16d, an incoming wind speed storing unit 16e, and a shear storing unit 16f. The Doppler wind speed storage unit 16a stores the wind speed calculated by the signal processing unit 12. The wind speed is stored with measurement time for each distance (time interval) and for each beam direction. That is, the wind speed is stored for each wind speed measurement section that is a combination of the beam direction and a time interval. The Doppler wind speed storage unit 16a is referred to by the incoming wind speed predicting unit 16b and the shear predicting unit 16c.

The incoming wind speed predicting unit 16b predicts the incoming wind speed at the wind turbine based on the wind speed. The incoming wind speed predicting unit 16b predicts the incoming wind speed at the wind turbine by weighting and averaging the wind speeds in each wind speed measurement section. The shear predicting unit 16c predicts the shear based on the wind speed. The shear predicting unit 16c calculates, by weighted averaging, an average shear obtained by calculating the shears for a plurality of distances and averaging the shears.

A shear is a rate of change in the altitude direction of the wind turbine front wind speed measured in the wind speed measurement sections having the same distance but different altitudes. A set of wind speed measurement sections having the same distance and the same altitude is referred to as a set of sections having same distance and same altitude. By dividing a difference between wind turbine front wind speeds measured in sets of sections having same distance and same altitude at different altitudes by the altitude difference, a shear, which is the rate of change in the wind turbine front wind speed in the altitude direction at that distance, is calculated. In general, the lower the altitude is, the lower the wind speed is. Therefore, the shear is calculated by dividing a difference in the wind speed obtained by subtracting a wind turbine front wind speed at a low altitude from a wind turbine front wind speed at a high altitude by the altitude difference.

A weighting coefficient storing unit 16d stores a weighting coefficient for incoming wind speed prediction 16g used by the incoming wind speed predicting unit 16b and a shear prediction weighting coefficient 16h used by the shear predicting unit 16c. An incoming wind speed storing unit 16e stores the incoming wind speed predicted by the incoming wind speed predicting unit 16b. A shear storing unit 16f stores the shear predicted by the shear predicting unit 16c.

The beam direction storing unit 17 stores angles representing a plurality of beam directions in which the wind measurement lidar device 1B transmits laser light. Angles representing a beam direction refers to an azimuth angle, an elevation angle, and a crossing angle with respect to the front direction of the wind turbine 2. The front direction is on a horizontal plane. The crossing angle is an angle between the front direction and the beam direction when the start points of the front direction of the wind turbine 2 and the beam direction are made to be at the same position. An azimuth angle is an angle formed by the beam direction and the front direction when the beam direction is projected on the horizontal plane. An elevation angle is an angle formed by the horizontal plane and the beam direction on a vertical plane including the beam direction.

Beam directions are determined so that there are a plurality of beam directions having the same azimuth angle but different elevation angles. At the same time, the divisions of wind speed measurement sections are aligned in each beam direction. As a result, a plurality of sets of sections having same distance and same altitude are present at the same distance from the wind turbine 2 but at different altitudes, and thus the shear can be calculated. In each wind speed measurement section, the altitude of the wind speed measurement section is calculated based on the distance, the elevation angle in the beam direction, and the altitude of the installation location of the wind measurement lidar device 1. Furthermore, the beam directions are determined so that there is a plurality of beam directions having the same elevation angle but different azimuth angles. As a result, a plurality of wind speed measurement sections belong to a set of sections having same distance and same altitude. The distance from the wind turbine 2 may be either a straight-line distance along the beam or a horizontal-plane distance obtained by projecting the beam on a horizontal plane. Since the elevation angle in each beam direction is less than or equal to about 15 degrees, the straight-line distance and the horizontal-plane distance are substantially the same.

The wind measurement lidar device 1B operates similarly to the wind measurement lidar device 1. The wind measurement lidar device 1B can measure the wind speed in each direction and at each distance with high accuracy. In addition, the measurement rate does not decrease in a distance range of a short distance. Furthermore, the wind measurement lidar device 1B can predict the wind speed and the shear of the incoming wind of the wind turbine.

First, a method of predicting the incoming wind speed performed by the incoming wind speed predicting unit 16b is described. An incoming wind speed V(t) can be predicted by the following Equation (1) described in Non-Patent Literature 3. In the wind measurement lidar device 1B, the incoming wind speed can be predicted with higher accuracy than in the prior art since the wind speed can be measured with higher accuracy than in the prior art at the long distance.

[Equation 1]

$$V(t) = \frac{1}{J} \sum_{j=1}^{J} V_{Lj}\left(t - \frac{(d_j - d_1)}{v}\right) \qquad \text{---(1)}$$

In Equation (1), t denotes the time (s) while a measurement is performed, v denotes an average wind speed (m/s) in the front direction of the wind turbine, d1 denotes the incoming wind speed predicting position (m), and when the incoming wind speed predicting position exists at the position of the wind turbine, d1 is determined to be 0 m. Symbol J denotes the number of distance ranges for measuring the wind speed. In the example illustrated in FIG. 2, J = 2. Symbol j denotes a range number representing a distance. In the example illustrated in FIG. 2, j = 1 or 2. Symbol dj denotes a distance (m) from the wind turbine in a distance range for which the wind speed is measured by the wind measurement lidar device 1B. $V_{Lj}(t)$ denotes the value (m/s) of a component in the front direction of the wind turbine of the wind speed at each distance j determined from the wind speed measured by the wind measurement lidar device 1B.

The value of $V_{Lj}$ is calculated using the following Equation (2) on the assumption that the wind is a horizontal wind and that the front direction of the wind turbine coincides with the wind direction. In Equation (2), measurement values of the wind speed at a distance dj in different beam directions are averaged and calculated. A horizontal wind is wind in which there is no component in the height direction in the wind speed.

[Equation 2]

$$V_{Lj}(t) = \frac{1}{I} \sum_{i=1}^{I} \frac{V_{LOS}(i,j)}{\cos\theta_i} \qquad\qquad \text{---(2)}$$

In Equation (2), I denotes the number of beams. In the example illustrated in FIG. 2, I = 4. Symbol i denotes a beam number. In the example illustrated in FIG. 2, i is any one value of i = 1, 2, 3, 4. $V_{LOS}(i, j)$ denotes a wind speed (m/s) corresponding to beam number i and range number j. $V_{LOS}(i, j)$ denotes a wind speed stored in the Doppler wind speed storage unit 16a. Symbol $\theta_i$ denotes a beam crossing angle (rad). $\theta_i$ denotes an angle (crossing angle) formed by each beam direction with respect to the front direction of the wind turbine as illustrated in FIG. 2. $\theta_i$ is stored in the beam direction storing unit 17.

The following Equation (3) is another possible method of determining the average wind speed v in the front direction of the wind turbine,. Equation (3) can calculate an average wind speed v faster than Equation (1) can.

[Equation 3]

$$v = \frac{1}{IJ} \sum_{j=1}^{J} \sum_{i=1}^{I} V_{LOS}(i,j) \qquad\qquad \text{---(3)}$$

In Equation (1), wind speed measurement values at each distance j are added with a uniform coefficient and an average is calculated. In the wind measurement lidar device 1B, it is likely to take a long time to measure the wind speed particularly at the long distance. If the measurement is performed over a long time, the measurement accuracy may be deteriorated due to some change on wind speed or the like within that time. Therefore, in each measurement result, the number of times of scanning a beam (how many times the measurement is performed in the beam direction) to reach a required SN ratio is stored, and the measurement value is weighted depending on this number of times. The weighting improves the prediction accuracy of the incoming wind speed. When Equation (1) is weighted, the following Equation (4) is used.

[Equation 4]

$$V(t) = \frac{1}{\sum_{j=1}^{J} Q_j} \sum_{j=1}^{J} Q_j V_{Lj}\left( t - \frac{(d_j - d_1)}{v} \right) \qquad\qquad \text{---(4)}$$

In Equation (4), Qj is a weighting coefficient corresponding to the number of times of scanning (the number of times of successive integration) in a distance range j (distance range whose range number is j). Qj is set to be a smaller value as the number of times of scanning increases by monotonically non-increasing. That is, Qj is determined so as to be larger when the number of times of scanning is small and to be smaller when the number of times of scanning is large. The number of times of scanning is the number of times indicating how many first integrated spectra are integrated. Since the number of times of scanning is different depending on the distance range j, Qj is a value that is set to be different depending on the distance range j. Qj denotes the weighting coefficient for incoming wind speed prediction 16g stored in the weighting coefficient storing unit 16d.

Instead of weighting and averaging the value $V_{Lj}$ of the component of the wind speed in the front direction of the wind turbine for each distance range j, the wind speed $V_{LOS}(i, j)$ measured in each beam direction may be weighted and averaged to obtain $V_{Lj}$. In that method, the following Equation (5) may be used instead of Equation (2). When the following Equation (5) is used, Equation (1A) obtained by replacing $V_{Lj}(t)$ with $V_{0Lj}(t)$ in Equation (1) is used.

[Equations 5]

$$V_{0Lj}(j) = \frac{1}{\sum_{i=1}^{I} R(i,j)} \sum_{i=1}^{I} \frac{R(i,j)V_{LOS}(i,j)}{\cos\theta_i} \qquad\qquad \text{---(5)}$$

$$V(t) = \frac{1}{J} \sum_{j=1}^{J} V_{0Lj} \left( t - \frac{(d_j - d_1)}{v} \right)$$  ---(1A)

In Equation (5), R(i, j) is a weighting coefficient corresponding to the number of times of scanning in a distance range of a beam number i and a range number j. R(i, j) is a modification of the weighting coefficient for incoming wind speed prediction 16g stored in the weighting coefficient storing unit 16d. R(i, j) is determined to be larger when the number of times of scanning is small and to be a smaller value by monotonically non-increasing when the number of times of scanning becomes larger. The weighting coefficients may be determined so that weighting coefficients have the same value at a plurality of number of times of scanning.

When Equations (1) and (4) are used, the incoming wind speed predicting unit calculates a plurality of distance wind speeds, which are wind speeds at respective distances, from wind speeds in wind speed measurement sections at the same distance and predicts the incoming wind speed by weighted averaging of the distance wind speeds. The distance wind speed calculated by Equation (1) is the average of wind speeds in wind speed measurement sections at the same distance. When Equations (1A) and (5) are used, the incoming wind speed predicting unit calculates a plurality of distance wind speeds, which are the wind speeds at respective distances, from the weighted averaging of wind speeds in wind speed measurement sections at the same distance and predicts the incoming wind speed by averaging the distance wind speeds.

Weighted averaging can also be applied to predict a shear (the rate of change in the value of a component of the wind speed in the front direction of the wind turbine in the altitude direction). Regarding incoming shear as well, the prediction accuracy is improved by determining a weighted averaging based on the reliability of wind speed measurement values. First, a calculation formula of the shear when the weighted averaging is not performed is described. Here, S(t) is an average value of shears at each distance j. $S_{Lj}(t)$ is a shear calculated at each distance j determined from the wind speed measured by the wind measurement lidar device. The shear calculated at each distance j is referred to as a distance shear.

[Equation 6]

$$S(t) = \frac{1}{J} \sum_{j=1}^{J} S_{Lj} \left( t - \frac{(d_j - d_1)}{v} \right)$$  ---(6)

As illustrated in FIG. 2, when an upper layer is measured by two beams (Beam 1, Beam 2) and a lower layer is measured by two beams (Beam 3, Beam 4), the distance shear $S_{Lj}(t)$ in a distance range of a range number j is calculated by the following Equation (7). Here, it is assumed that the wind is a horizontal wind. In the wind measurement lidar device 1B, since the wind speed can be measured with higher accuracy than in the prior art at the long distance, the shear can be predicted with higher accuracy than in the prior art when the weighted averaging is not performed.

[Equation 7]

$$S_{Lj}(t) = \frac{\sum_{i=1}^{2} \frac{V_{LOS}(i,j)}{cos\theta_i} - \sum_{i=3}^{4} \frac{V_{LOS}(i,j)}{cos\theta_i}}{h_j}$$  ---(7)

In Equation (7), $h_j$ is an altitude difference between an upper layer beam and a lower layer beam at each distance j. In Equation (7), when the set of sections having same distance and same altitude includes a plurality of wind speed measurement sections, an average of the wind turbine front wind speeds measured in the plurality of wind speed measurement sections is determined, and the average is used as the wind turbine front wind speed of the set of sections having same distance and same altitude. $S_{Lj}(t)$ calculated by Equation (7) is referred to as a distance shear at distance j. When there are sets of sections having same distance and same altitude at a distance at three or more different altitudes, a straight line that linearly approximates the wind speed with respect to an altitude at which the square error is minimized is determined and the shear from the inclination of the straight line is calculated. Alternatively, the shear may be calculated for all possible combinations of two altitudes, and the average of the calculated shears may be used as the distance shear at that distance. The average used to calculate the distance shear may be either a simple average or a weighted averaging depending on the altitude difference. In a method of performing weighted averaging, a larger weight is given to shear, which is calculated from a set of two wind speed measurement sections having a larger altitude difference, than to shear which is calculated from a set of two wind speed measurement sections having a smaller altitude difference.

A weighted averaging by weighting coefficient Qj of shears $S_{Lj}(t)$ at respective distances j is calculated by the following equation. When Qj is used to predict the shear, Qj is also the shear prediction weighting coefficient 16h stored in the weighting coefficient storing unit 16d.

[Equation 8]

$$S(t) = \frac{1}{J} \frac{1}{\sum_{j=1}^{J} Q_j} \sum_{j=1}^{J} Q_j S_{Lj}\left(t - \frac{(d_j - d_1)}{v}\right) \qquad \text{---(8)}$$

When wind speeds $V_{LOS}(i, j)$ are calculated by weighted averaging, $S_{OLj}(t)$ is calculated using weighting coefficient R(i, j) in the following Equation (9). When Equation (9) is used, Equation (6A) is used in which $S_{Lj}(t)$ is replaced with $S_{OLj}(t)$ in Equation (6). When R(i, j) is used to predict the shear, R(i, j) is also the shear prediction weighting coefficient 16h stored in the weighting coefficient storing unit 16d.

[Equations 9]

$$S_{OLj}(t) = \frac{1}{\sum_{i=1}^{I} R(i,j)} \frac{\sum_{i=1}^{2} \frac{R(i,j)V_{LOS}(i,j)}{cos\theta_i} - \sum_{i=3}^{4} \frac{R(i,j)V_{LOS}(i,j)}{cos\theta_i}}{h_j} \qquad \text{---(9)}$$

$$S(t) = \frac{1}{J} \sum_{j=1}^{J} S_{OLj}\left(t - \frac{(d_j - d_1)}{v}\right) \qquad \text{---(6A)}$$

In a method of using equations (6) and (7), the shear predicting unit predicts a plurality of distance shears, which is shears of respective distances and predicts an average shear by weighted averaging of the distance shears. When Equations (6A) and (9) are used, the shear predicting unit predicts a plurality of distance shears, which is shears at respective distances, based on shears weighted depending on a distance of the wind speed measurement section and predicts an average shear by averaging the distance shears.

Instead of obtaining a set of sections having same distance and same altitude, a set of sections having same distance and same azimuth, which is a set of wind speed measurement sections having the same azimuth angle direction and the same distance but different altitudes, may be obtained for each azimuth angle. One shear may be calculated in a set of sections having same distance and same azimuth in each azimuth angle, and an average of shears calculated at the same distance but at different azimuth angles may be used as the distance shear at that distance.

A weighted averaging using weighting coefficients based on the reliability of wind speed measurement values may be calculated for one or both of the prediction of the incoming wind speed and the prediction of the shear. Here, the reliability of the wind speed measurement value is the number of times of scanning in the beam direction required to measure the wind speed. The weighting coefficient is set to be monotonically non-increasing to the decreasing of the reliability of the wind speed measurement value. That is, the weighting coefficient is set to be larger when the reliability of the wind speed measurement value is higher and to be smaller when the reliability is lower. Different weighting coefficients may be used to predict the incoming wind speed and to predict the shear.

As a shear at each distance, a wind shear exponent $\alpha$ that is calculated by the following equation may be used, where altitudes at two points are denoted by h1 and h2, a wind speed at altitude h1 is denoted by v1, and a wind speed at altitude h2 is denoted by v2.

$$\alpha = \ln(v2/v1)/\ln(h2/h1)\ldots\ldots\ldots(10)$$

In Equation (10), ln(x) is a function that returns a natural logarithm of real number x. When wind speeds at three or more altitudes can be measured, $\alpha$ that minimizes the sum of squares of errors at different altitudes is calculated.

Even at the same distance, a situation may occur in which the SN ratio of the integrated spectrum is different among beams. As a result, a situation in which the SN ratio of the integrated spectrum does not reach the required SN ratio may occur for some beams upon scanning once, that is, when all beams are each measured once. For example, in FIG. 2, this can be a situation in which the blades of the wind turbine rotate and block one or more of the four beams. In this situation, when $V_{Lj}$ of a component of the wind speed in the front direction of the wind turbine at each distance j is obtained using Equation (2) or Equation (5), an imbalance occurs in the number of pieces of data in the upper layer and the lower layer. For example, the wind speed can be calculated only for Beam 1, Beam 2, and Beam 3. When such a situation occurs, the influence of the wind speed at the upper layer is strong in the prediction of the incoming wind speed; however, when there is shear in the wind field, the prediction accuracy of the incoming wind speed decreases due to lack of information of the lower layer. In such a situation, by applying a larger weight to a wind speed measurement value of the lower layer, that is, Beam 3, the upper layer and the lower layer can be balanced equivalently, the influence of shear can be moderated to some extent, and the prediction accuracy of the incoming wind speed can be ensured.

In the example illustrated in FIG. 2, the four beam directions are distributed to two beam directions at two elevation angles. The number of beam directions may be greater than four and is only required to be determined so that there are same number of beam directions in all of different elevation angles. That is, it is only required that the plurality of beam directions are determined so that the number of other beam directions having the same elevation angle as the elevation angle of each beam direction is greater than or equal to one at each elevation angle. When, at each elevation angle, the number of beam directions at that elevation angle is the same and two or more, the number of other beam directions having the same elevation angle as the elevation angle of each beam direction is determined to be the same and greater than or equal to one in each elevation angle. In a beam direction at the elevation angle (elevation angle 1) in which there are a small number of beam directions in which the wind speed is calculated, the incoming wind speed predicting unit 16b predicts the incoming wind speed by making the weighting coefficient greater than that for beam directions at other elevation angles (elevation angles different from the elevation angle 1). At other elevation angles, there are more beam directions in which the wind speed are measured than at the elevation angle 1.

In addition, for example, when the SN ratio of the integrated spectrum reach the required SN ratio only by the two beams in the upper layer due to the influence of blocking by the blades or the like, a wind speed measurement value cannot be obtained in the lower layer. When no wind speed measurement value can be obtained in the lower layer, a wind speed measurement value in the lower layer can be assumed from a wind speed measurement value in the upper layer and, for example, shear data measured most recently by using Equations (6) and (7), and the incoming wind speed may be predicted based on this assumed value. Here, the case where the number of beams is four, and there are two layers of the upper layer and the lower layer is described. The number of layers in the vertical direction of the beam may be greater than or equal to three. For example, the number of beams may be 6, and three layers of an upper layer, a middle layer, and a lower layer may be measured.

The incoming wind speed predicting unit estimates the wind speed at a non-measurement elevation angle, which is an elevation angle at which there is no beam direction in which the wind speed is measured based on the wind speed measured in a beam direction having an elevation angle adjacent to the non-measurement elevation angle and the shear measured most recently and predicts the incoming wind speed using an estimated value of the wind speed at the non-measurement elevation angle.

By controlling any one or more of the orientation of the wind turbine 2 (yaw angle), the orientation of the blades (pitch angle), and the rotational torque based on the prediction result of the incoming wind speed or the shear by the wind measurement lidar device 1B, it is possible to contribute to any one or more of the improvement of the power generation amount of the wind turbine 2, reduction of the load applied to the blades, reduction of the load applied to a rotating part, and reduction of the load applied to a wind turbine tower. Only one of the wind speed (incoming wind speed) and the shear of the incoming wind may be predicted and used for the control of the wind turbine.

The wind measurement lidar device 1B predicts the incoming wind speed on the assumption that the front direction of the wind turbine coincides with the wind direction as described in the explanation of Equation (2). As one of methods of matching the front direction of the wind turbine with the wind direction, the direction (yaw angle) of the wind turbine 2 is controlled so that the front direction of the wind turbine coincides with the wind direction measured by an anemometer using the anemometer for measuring the wind direction. The anemometer is, for example, a vane-type anemometer. In this method, there are situations in which a backward flow (wake) occurs due to the rotation of the blades of the wind turbine, and an error may occur in the wind direction value due to the influence of the backward flow. The wind measurement lidar device may measure the wind direction, and the direction of the wind turbine 2 may be controlled by the wind direction measured by the wind measurement lidar device.

Third Embodiment

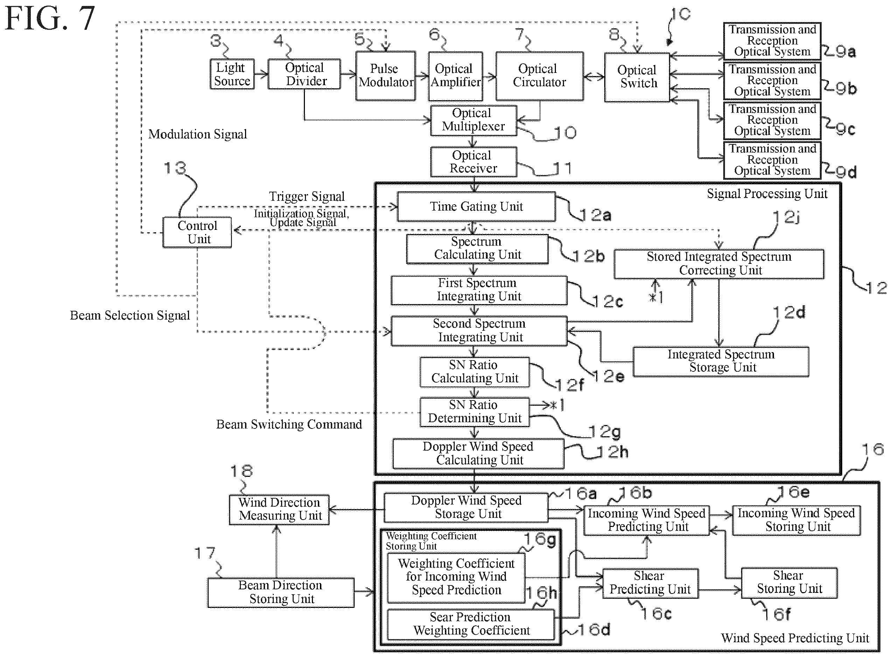

A third embodiment is an embodiment in which the second embodiment is modified so as to include a wind direction measuring unit for measuring a wind direction at the long distance. FIG. 7 is a schematic diagram illustrating the configuration of a wind measurement lidar device according to the third embodiment. In FIG. 7, points that are different from FIG. 6 of the second embodiment are described. A wind measurement lidar device 1C includes a wind direction measuring unit 18.

The wind direction measuring unit 18 measures a wind direction at the long distance with respect to the wind turbine. In the wind measurement lidar device 1C, the wind speed predicting unit 16 and the wind direction measuring unit 18 constitute an incoming wind information predicting unit.

A long distance is defined as a distance from the wind turbine is greater than or equal to 2 times of D, where D is the rotor diameter of the wind turbine. The definition of the long distance is a distance that is required to be used for evaluation of the wind turbine power generation amount in Non-Patent Literature 3.

The reason for measuring the wind direction at the long distance is to moderate the influence of forward turbulence. Rotation of the blades of the wind turbine 2 causes forward turbulence called "induction" in front of the wind turbine 2. Due to the forward turbulence, it is difficult to measure the wind direction in the vicinity of the wind turbine. The entire wind direction is less likely to be disturbed at the long distance where there is no influence of the "induction". Therefore, the wind direction is measured at the long distance. The wind measurement lidar device 1C can measure the wind direction with less error than in the prior art.

The wind direction measuring unit 18 calculates a wind vector based on wind speeds (strictly speaking, the line-of-sight direction wind speeds) measured at a distance range of the long distance in a plurality of different beam directions and the data of beam directions stored in the beam direction storing unit 17. The wind speed calculated by the Doppler wind speed calculating unit 12h is a speed obtained by calculating an inner product of the wind vector and a unit vector (beam direction vector) in the beam direction (line-of-sight direction). When it is assumed that the wind vector is uniform at the long distance, a wind vector can be determined based on wind speed measurement values and beam direction vectors in three or more beam directions. The wind direction measuring unit 18 calculates the direction of the wind vector calculated at the long distance as the wind direction. When a horizontal wind is assumed, the wind speed may be calculated in two beam directions. In a method of measuring the wind speed in four or more beam directions, the wind direction measuring unit 18 calculates a wind vector so that, for example, the sum of square errors is minimized.

The wind direction value measured by the wind measurement lidar device 1C in a distance range included in the long distance is used for yaw angle control of the wind turbine 2. Since the wind direction can be measured more accurately than in measuring at a short distance, the front direction of the wind turbine 2 can be matched with the wind direction with high accuracy. By matching the front direction of the wind turbine 2 with the wind direction accurately, the power generation efficiency of the wind turbine 2 is improved. Also when only the wind direction is predicted and measured without predicting the incoming wind speed or the shear, the power generation efficiency of the wind turbine 2 is improved by using the predicted wind direction for the control of the wind turbine.

In the wind measurement lidar device according to the present disclosure, it is likely to take a long time to measure the wind speed of the long distance; however, since the entire of wind turbine 2 is moved in the yaw angle control of the wind turbine 2, the control speed is slow. Therefore, it is not a disadvantage that it may take a long time to measure the wind speed at the long distance in controlling the yaw angle of the wind turbine 2.

The wind measurement lidar device 1C operates similarly to the wind measurement lidar device 1. The wind measurement lidar device 1C can measure the wind speed in each direction and at each distance with high accuracy. In addition, the measurement rate does not decrease in a distance range of a short distance. Furthermore, the wind measurement lidar device 1C can predict the wind speed and the shear of the incoming wind of the wind turbine. The wind measurement lidar device 1C can also measure the wind direction at the long distance. By using the measured wind direction for yaw angle control of the wind turbine, the power generation efficiency of the wind turbine 2 can be improved.

Fourth Embodiment

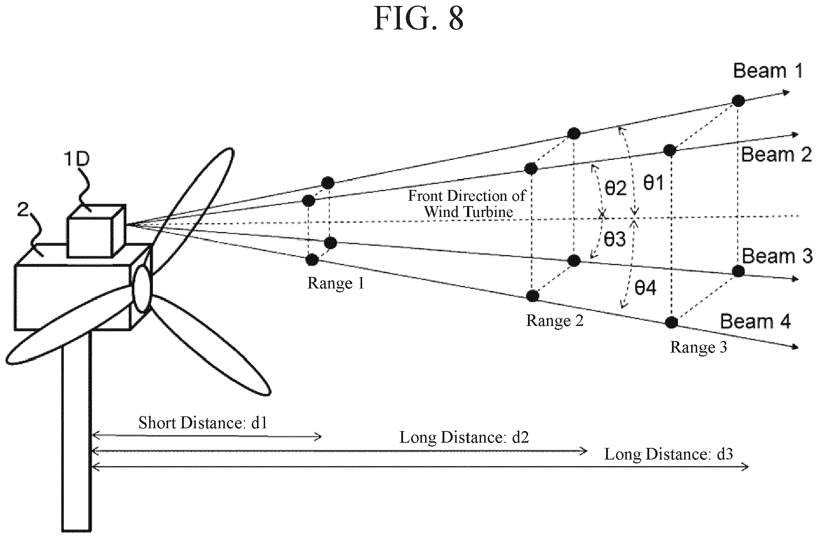

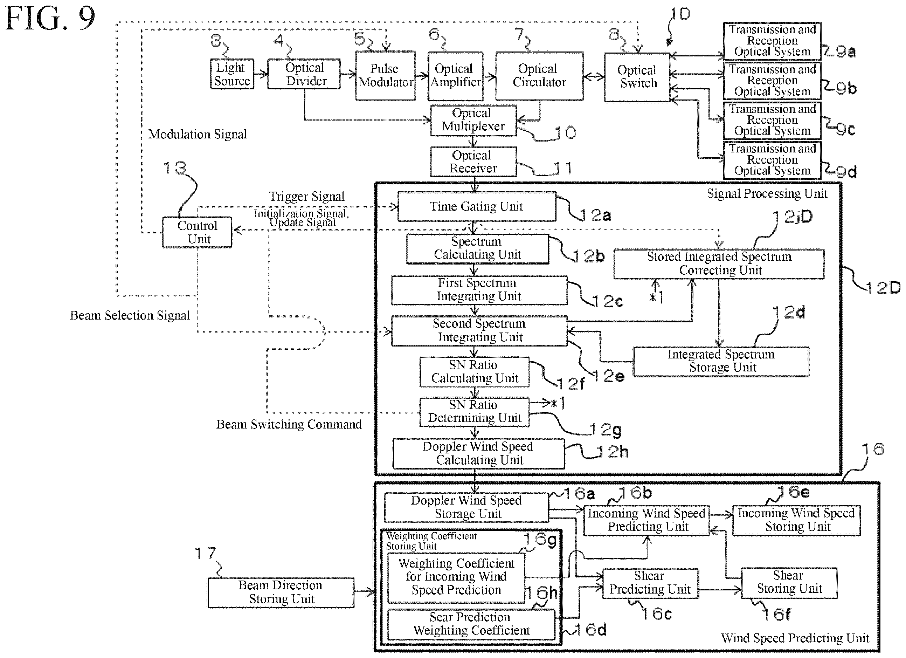

A fourth embodiment is an embodiment in which the second embodiment is modified so that a distance range is defined so that there is a plurality of distance ranges classified as the long distance and that spectra of divided reception signals in the plurality of distance ranges of the long distance are integrated together for each beam direction. FIG. 8 is a schematic diagram illustrating the distance for measuring the wind speed in a wind measurement lidar device according to the fourth embodiment. FIG. 9 is a schematic diagram illustrating the configuration of the wind measurement lidar device according to the fourth embodiment. In FIG. 9, points that are different from FIG. 6 of the second embodiment are described. The first embodiment, the third embodiment, or other embodiments may be modified.

As illustrated in FIG. 8, the wind measurement lidar device 1D transmits and receives four beams of Beam 1, Beam 2, Beam 3, and Beam 4. In each beam, the wind speed is measured at three points of distance d1, distance d2, and distance d3. Distance d2 and distance d3 are classified as the long distance. Distance d1 is classified as a short distance (not the long distance). For the long distance d2 and the long distance d3, spectrum data calculated at the respective distances are integrated together. It can be considered that the wind speed is substantially the same between the long distance d2 and the long distance d3. Therefore, by integrating the spectrum data calculated at the long distance d2 and the long distance d3 together, the SN ratio of the spectrum data can be increased, and the wind speed at the long distance can be measured more accurately.

The number of distances for measuring the wind speed with each beam may be greater than or equal to four. Two or more of wind speed measurement sections that are not the long distance may be provided. The wind measurement lidar device 1D stores data indicating distances to be processed as the long distance are placed at what count or farther when counted from the near side.

In the wind measurement lidar device 1D, a stored integrated spectrum correcting unit 12jD is modified, and when the spectrum data integrated by the second spectrum integrating unit 12e is stored in the integrated spectrum storage unit 12d in S13 illustrated in FIG. 3, the stored integrated spectrum correcting unit 12jD overwrites and stores all distances classified as the long distance in that beam direction with the spectrum data integrated by the second spectrum integrating unit 12e at one distance that is classified as the long distance in that beam direction. When the spectrum is integrated at a distance that is not the long distance in that beam direction, the stored integrated spectrum correcting unit 12jD overwrites and stores the integrated spectrum storage unit 12d with the spectrum data integrated by the second spectrum integrating unit 12e only for that beam direction and that distance.

When the stored integrated spectrum correcting unit 12jD stores the integrated spectrum in this manner, an integrated spectrum stored in the integrated spectrum storage unit 12d for a distance that is the long distance in each beam direction is obtained by integrating spectra collectively at a plurality of distances that are the long distance. In addition, at each distance which is the long distance in each beam direction, integrated spectra stored in the integrated spectrum storage unit 12d are the same.

When spectra of a plurality of distances that are the long distance are integrated collectively, the integrated spectrum read from the integrated spectrum storage unit 12d by the second spectrum integrating unit 12e is an integrated spectrum obtained by integrating all pieces of spectrum data calculated at a plurality of distances that are the long distance in the same beam direction.

The wind measurement lidar device 1D operates similarly to the wind measurement lidar device 1B. The wind measurement lidar device 1D can measure the wind speed in each direction and at each distance with high accuracy. In addition, the measurement rate does not decrease in a distance range of a short distance. Furthermore, the wind measurement lidar device 1D can predict the wind speed and the shear of the incoming wind of the wind turbine.

The wind measurement lidar device 1D can measure the wind speed at a longer distance more certainly than the wind measurement lidar device 1B can. Therefore, this is particularly effective when the inflow (arrival) of a gust is detected in advance using a wind speed measurement value at the long distance.

A single integrated spectrum may be determined for the beam direction by integrating spectra calculated in a plurality of wind speed measurement sections classified into the long distance. When there is one or more integrated spectra of the long distance, it is only required that the spectrum integrating unit integrate spectra of divided reception signals in a plurality of time intervals collectively corresponding to a plurality of distances classified as the long distance for each beam direction.

Fifth Embodiment

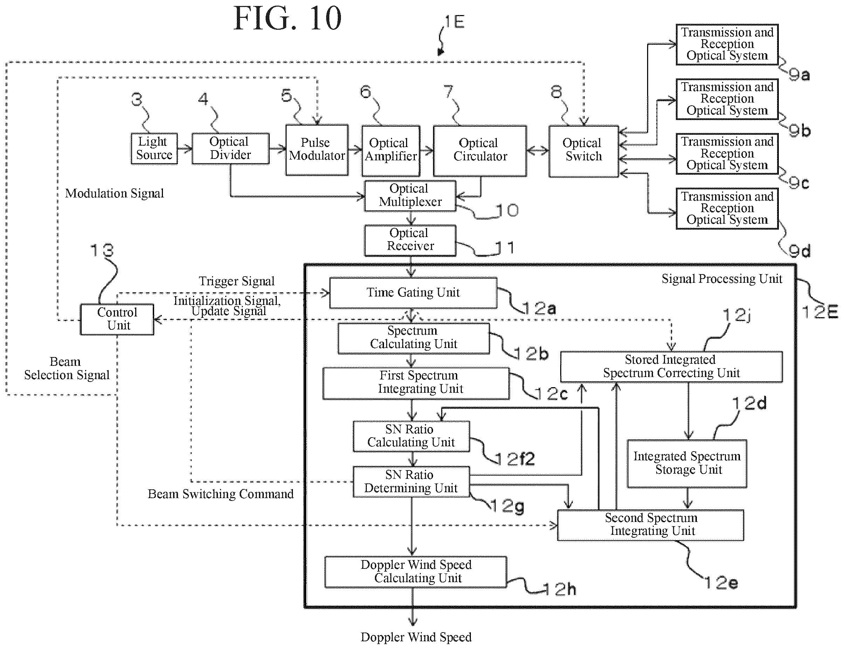

A fifth embodiment is an embodiment in which the first embodiment is modified such that whether or not the SN ratio of the first integrated spectrum integrated by the first spectrum integrating unit is greater than or equal to the first threshold value is checked and that, when the SN ratio of the first integrated spectrum is greater than or equal to the first threshold value, the wind speed is calculated only from the first integrated spectrum that is currently integrated. In the fifth embodiment, the methods (a2), (b1), and (c1) are used. FIG. 10 is a schematic diagram illustrating the configuration of a wind measurement lidar device according to the fifth embodiment. In FIG. 10, points that are different from FIG. 1 of the first embodiment are described. The second to fourth embodiments or other embodiments may be modified. The same applies to the following embodiments as well.

A wind measurement lidar device 1E includes a signal processing unit 12E. The signal processing unit 12E includes an SN ratio calculating unit 12f2. The SN ratio calculating unit 12f2 calculates the SN ratio of the first integrated spectrum integrated by the first spectrum integrating unit 12c and the SN ratio of the second integrated spectrum integrated by the second spectrum integrating unit 12e. The SN ratio determining unit 12g determines whether or not the SN ratios calculated by the SN ratio calculating unit 12f2 are greater than or equal to the first threshold value.

When the SN ratio of the first integrated spectrum is greater than or equal to the first threshold value, the Doppler wind speed calculating unit 12h calculates the Doppler wind speed from the first integrated spectrum. When the SN ratio of the first integrated spectrum is not greater than or equal to the first threshold value, the second integrated spectrum is generated. When the SN ratio of the second integrated spectrum is greater than or equal to the first threshold value, the Doppler wind speed calculating unit 12h calculates the Doppler wind speed from the second integrated spectrum. When the SN ratio of the second integrated spectrum is not greater than or equal to the first threshold value, the stored integrated spectrum correcting unit 12j stores the second integrated spectrum into the integrated spectrum storage unit 12d. That is, when the Doppler wind speed calculating unit 12h does not calculate the Doppler wind speed, the stored integrated spectrum correcting unit 12j stores the second integrated spectrum into the integrated spectrum storage unit 12d.

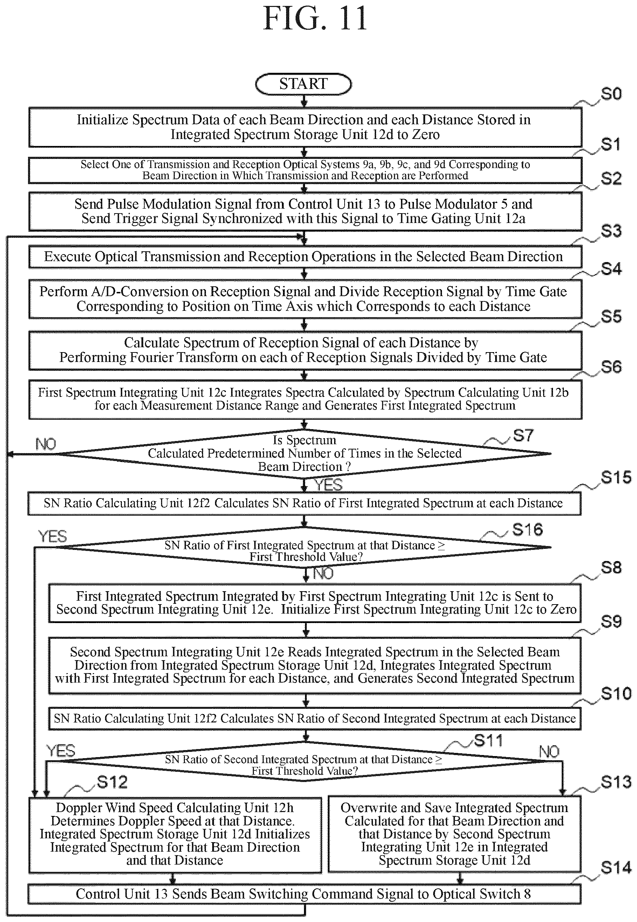

FIG. 11 is a flowchart illustrating the operation of the wind measurement lidar device according to the fifth embodiment. In FIG. 11, points that are different from FIG. 3 of the first embodiment are described. Steps S15 and S16 are added between S7 and S8. In S7, it is checked whether or not the spectrum is calculated the predetermined number of times in the selected beam direction. If the spectrum is not calculated the predetermined number of times (NO in S7), the process returns to S3. If the spectrum is calculated the predetermined number of times (YES in S7), in S15, the SN ratio calculating unit 12f2 calculates the SN ratio of the first integrated spectrum at each distance integrated by the first spectrum integrating unit 12c. In S16, the SN ratio determining unit 12g compares the SN ratio of the first integrated spectrum at each distance calculated in S15 with the first threshold value for each distance.

For the distance range in which the SN ratio of the first integrated spectrum is greater than or equal to the first threshold value (YES in S16), the process proceeds to S12. In step S12, the Doppler wind speed calculating unit 12h determines the Doppler frequency shift from the peak frequency of the spectrum obtained in S15 and determines the Doppler wind speed (wind speed) corresponding to the Doppler frequency shift. Furthermore, the control unit 13 sends an initialization signal to the stored integrated spectrum correcting unit 12j, and the stored integrated spectrum correcting unit 12j initializes (resets to zero) the value of the spectrum data regarding the beam direction and the distance range (wind speed measurement section) for which the wind speed is calculated, the value of the spectrum data being stored in the integrated spectrum storage unit 12d.

For a distance range for which the wind speed is not calculated since the SN ratio of the first integrated spectrum is smaller than the first threshold value (NO in S16), the process proceeds to S8. In S8, the first integrated spectrum integrated by the first spectrum integrating unit 12c is sent to the second spectrum integrating unit 12e. Then, the integrated spectrum remaining in the first spectrum integrating unit 12c is initialized to zero. The processes after S8 are similar to those in the first embodiment.

The wind measurement lidar device 1E operates similarly to the wind measurement lidar device 1. The wind measurement lidar device 1E can measure the wind speed in each direction and at each distance with high accuracy. In addition, the measurement rate does not decrease in a distance range of a short distance. The wind measurement lidar device 1E can further reduce the number of times to generate the first integrated spectrum as compared with that of the wind measurement lidar device 1. The number of times of generating the first integrated spectrum is referred to as the number of times of generation.

Although the description of a simulation method and the result of the simulation are omitted, the wind measurement lidar device 1E can reduce the number of times of generating the first integrated spectrum by about 0.5 times than in the wind measurement lidar device 1 under the setting condition in the simulation. A description of the simulation method and the results is described in PCT/JP2020/002798 to which this application claims priority.

When the wind measurement lidar device predicts incoming wind information that is any one of the incoming wind speed, the shear, and the wind direction, the accuracy of the incoming wind information that is predicted is also improved. The same applies to the following embodiments as well.

Sixth Embodiment

A sixth embodiment is an embodiment in which the fifth embodiment is modified such that first integrated spectrum is integrated to generate the second integrated spectrum only when the SN ratio of the first integrated spectrum is not low. In the sixth embodiment, the methods (a2), (b3), and (c5) are used. In a wind measurement lidar device 1F of the sixth embodiment, the determination target wind speed measurement sections, which are one or more of wind speed measurement sections (distance ranges), are determined in advance for each beam direction. When the SN ratio of the first integrated spectrum in each distance range of the determination target wind speed measurement section is calculated, where it is determined whether or not the number of distance ranges in which the SN ratio is greater than or equal to the second threshold value is greater than or equal to a predetermined lower limit number, and where the number of distance ranges is greater than or equal to the lower limit number, the first integrated spectrum that is integrated currently is integrated with an integrated spectrum stored in the integrated spectrum storage unit 12d.

The determination target wind speed measurement sections may be all distance ranges in that beam direction, or distance ranges existing within the predetermined number from the shortest distance range. The determination target wind speed measurement section may be determined so as to include a distance range in which it can be determined whether or not a signal indicating the wind speed is included in the reception signal. The lower limit number is set to an appropriate number greater than or equal to one.

By evaluating comprehensively the SN ratio of the first integrated spectrum in the determination target wind speed measurement section determined for each beam direction, whether or not the first integrated spectrum is used for integration of the second integrated spectrum can be determined appropriately. When the SN ratio of the first integrated spectrum is evaluated for the determination target wind speed measurement section individually, there is a possibility that the wind speed measurement section in which first integrated spectrum is used for integration and the wind speed measurement section in which first integrated spectrum is not used are mixed in one beam direction.

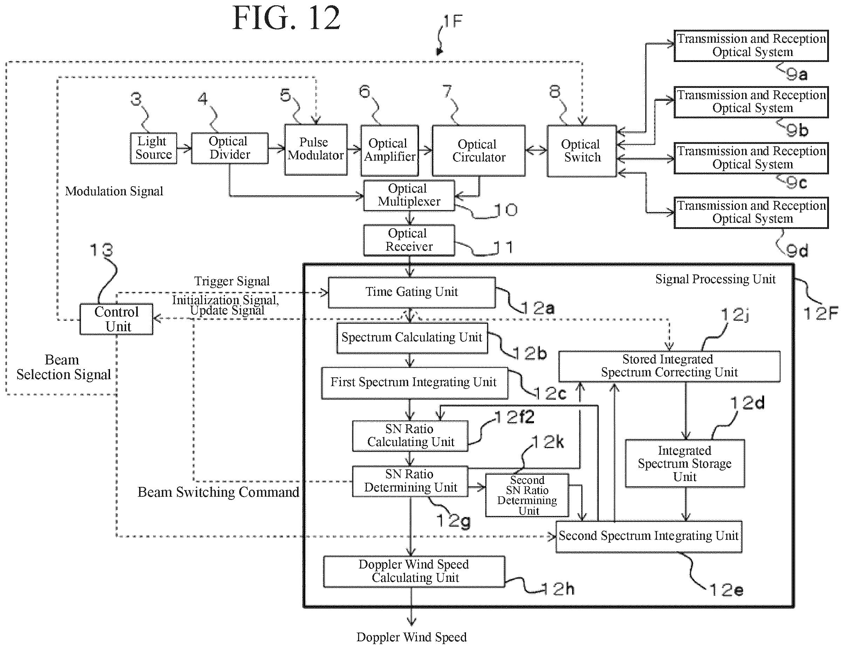

FIG. 12 is a schematic diagram illustrating the configuration of the wind measurement lidar device according to the sixth embodiment. In FIG. 12, points that are different from FIG. 10 of the fifth embodiment are described.

The wind measurement lidar device 1F includes a signal processing unit 12F. The signal processing unit 12F includes a second SN ratio determining unit 12k in addition to the SN ratio determining unit 12g. When the SN ratio of the first integrated spectrum is not greater than or equal to the first threshold value, the second SN ratio determining unit 12k determines whether or not the SN ratio of the first integrated spectrum is greater than or equal to the second threshold value. The second SN ratio determining unit 12k determines whether or not the number of distance ranges, which are included in the determination target wind speed measurement section and have the SN ratio greater than or equal to the second threshold value, is greater than or equal to a lower limit number.

When the second SN ratio determining unit 12k determines that the number of distance ranges in which the SN ratio of the first integrated spectrum is greater than or equal to the second threshold value is greater than or equal to the lower limit number, the second spectrum integrating unit 12e integrates the first integrated spectrum with the integrated spectrum stored in the integrated spectrum storage unit 12d in that beam direction. Otherwise, the second spectrum integrating unit 12e does not integrate the first integrated spectrum with an integrated spectrum stored in the integrated spectrum storage unit 12d. When the integration is not performed, the integrated spectrum stored in the integrated spectrum storage unit 12d is not changed.

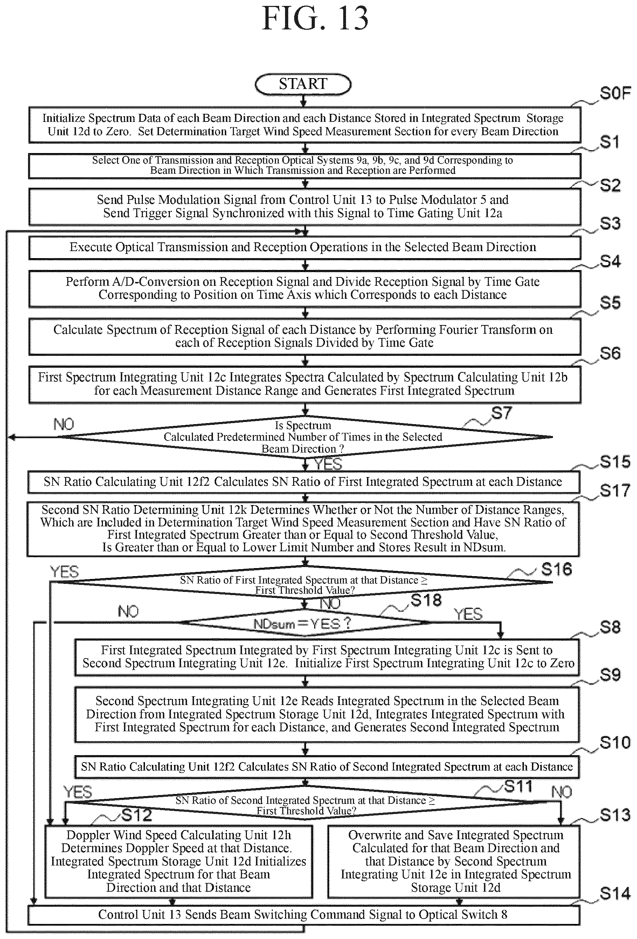

FIG. 13 is a flowchart illustrating the operation of the wind measurement lidar device according to the sixth embodiment. In FIG. 13, points that are different from

FIG. 11 of the fifth embodiment are described. Step S0F is modified, step S17 is added before S16, and step S18 is added before S8.

In S0F, the determination target wind speed measurement section is set for each beam direction.

In step S17, the second SN ratio determining unit 12k determines whether or not the number of distance ranges, which are included in the determination target wind speed measurement section and have the SN ratio of the first integrated spectrum greater than or equal to the second threshold value, is greater than or equal to the lower limit number. The determination result is stored in variable NDsum. When the number of distance ranges, which are included in the determination target wind speed measurement section and have the SN ratio of the first integrated spectrum greater than or equal to the second threshold value, is greater than or equal to the lower limit number, it is set that NDsum = YES. Otherwise, it is set that NDsum = NO.

**[0170]** In S16, the process proceeds to S18 for a distance range in which no wind speed is calculated (NO in S16) since the SN ratio is smaller than the first threshold value. In S18, whether or not NDsum = YES holds is checked. If NDsum = YES (YES in S18), the process proceeds to S8. In S8, the first integrated spectrum is sent to the second spectrum integrating unit 12e. If NDsum = YES does not hold (NO in S18), the process proceeds to S14 in order to emit a beam of laser light in a next beam direction without using the first integrated spectrum for integration with the second integrated spectrum.

The wind measurement lidar device 1F operates similarly to the wind measurement lidar device 1E. The wind measurement lidar device 1F can measure the wind speed in each direction and at each distance with high accuracy. In addition, the measurement rate does not decrease in a distance range of a short distance. The wind measurement lidar device 1F can further reduce the number of times of generating the first integrated spectrum as compared with that of the wind measurement lidar device 1E.

In a distance range belonging to the determination target wind speed measurement section, when the number of distance ranges in which the SN ratio of the first integrated spectrum is greater than or equal to the second threshold value is not greater than or equal to the lower limit number, the wind measurement lidar device 1F does not integrate the first integrated spectrum. Therefore, the SN ratio of the integrated spectrum stored in the integrated spectrum storage unit 12d is higher in the wind measurement lidar device 1F than in the wind measurement lidar device 1E. For example, when blocking by the blades occurs in all distance ranges, the SN ratio has a value close to 0 in all distance ranges in that beam direction. In such a situation, the wind measurement lidar device 1F does not integrate the first integrated spectrum with the integrated spectrum stored in the integrated spectrum storage unit 12d. Therefore, the integrated spectrum storage unit 12d continues to store the stored integrated spectrum that is stored before the first spectrum integrating unit 12c generating the first integrated spectrum. That is, the integrated spectrum stored in the integrated spectrum storage unit 12d is not changed.

Seventh Embodiment

A seventh embodiment is an embodiment in which the sixth embodiment is modified so that, in a distance range in which the SN ratio of the first integrated spectrum is not greater than or equal to the third threshold value, the first integrated spectrum is not integrated when the first integrated spectrum is integrated for that beam direction thereof. The method (a2), the method (b4) and the method (c5) are used in the seventh embodiment.

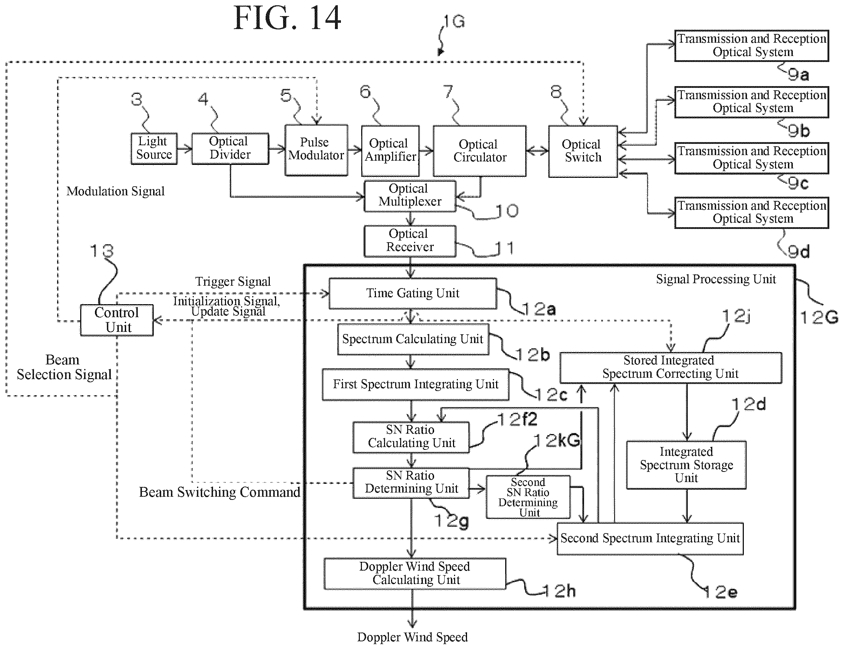

FIG. 14 is a schematic diagram illustrating the configuration of a wind measurement lidar device according to the seventh embodiment. In FIG. 14, points that are different from FIG. 12 of the sixth embodiment are described.

A wind measurement lidar device 1G includes a signal processing unit 12G. In the signal processing unit 12G, the second SN ratio determining unit 12k is modified to a second SN ratio determining unit 12kG. In addition to the checking similar to that of the second SN ratio determining unit 12k, the second SN ratio determining unit 12kG determines whether or not the SN ratio of the first integrated spectrum is greater than or equal to the third threshold value.

The second SN ratio determining unit 12kG determines whether or not the number of distance ranges, which are included in the determination target wind speed measurement section and have the SN ratio greater than or equal to the second threshold value, is greater than or equal to the lower limit number. When the number of distance ranges, which are included in the determination target wind speed measurement section and have the SN ratio greater than or equal to the second threshold value, is greater than or equal to the lower limit number, the second SN ratio determining unit 12kG determines whether or not the SN ratio of the first integrated spectrum of each distance range is greater than or equal to the third threshold value.

When the number of distance ranges, which are included in the determination target wind speed measurement section and have the SN ratio greater than or equal to the second threshold value, is not greater than or equal to the lower limit number, the second integrated spectrum is not integrated for that beam direction. When the number of distance ranges, which are included in the determination target wind speed measurement section and have the SN ratio greater than or equal to the second threshold value, is greater than or equal to the lower limit number, in a distance range in which the second SN ratio determining unit 12kG determines that the SN ratio of the first integrated spectrum is greater than or equal to the third threshold value, the first integrated spectrum is integrated with the integrated spectrum stored in the integrated spectrum storage unit 12d. Otherwise, the second spectrum integrating unit 12e does not integrate the first integrated spectrum with an integrated spectrum stored in the integrated spectrum storage unit 12d. The integrated spectrum storage unit 12d stores the stored integrated spectrum that is stored before the first spectrum integrating unit 12c generating the first integrated spectrum.

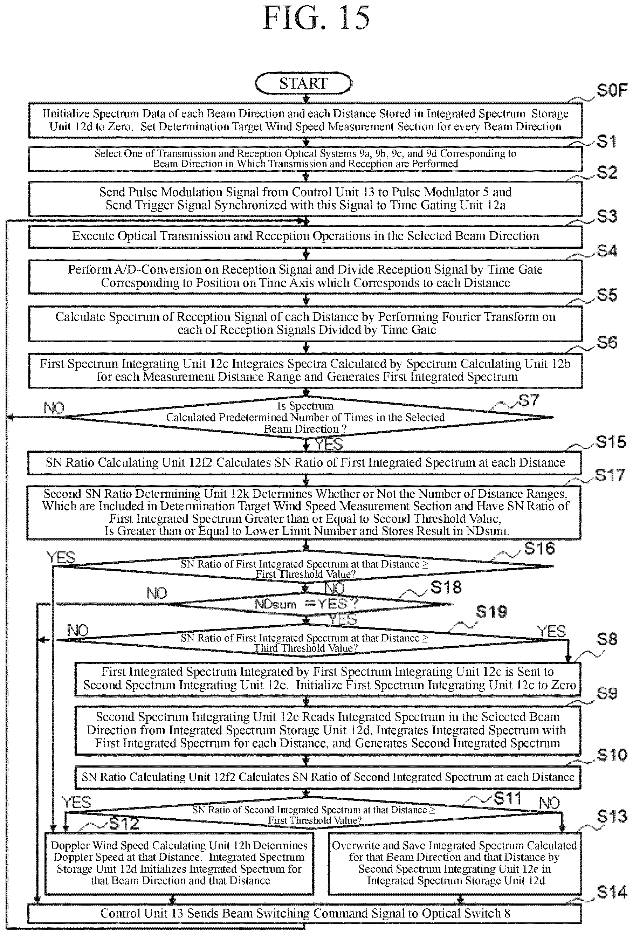

FIG. 15 is a flowchart illustrating the operation of the wind measurement lidar device according to the seventh embodiment. In FIG. 15, points that are different from FIG. 13 of the sixth embodiment are described. Step S19 is added after S18. In S19, it is checked whether or not the SN ratio of the first integrated spectrum of each distance range is greater than or equal to the third threshold value. When the SN ratio of the distance range is greater than or equal to the third threshold value (YES in S19), the process proceeds to S8. If the distance range is not greater than or equal to the third threshold value (YES in S19), the process proceeds to S14.

The wind measurement lidar device 1G operates similarly to the wind measurement lidar device 1F. The wind measurement lidar device 1G can measure the wind speed in each direction and at each distance with high accuracy. In addition, the measurement rate does not decrease in a distance range of a short distance. In addition, the number of times of generating the first integrated spectrum can be reduced.

In the seventh embodiment, when first integrated spectrum is used for integration of the second integrated spectrum in a beam direction, it is checked whether or not the SN ratio of the first integrated spectrum is greater than or equal to the third threshold value in each distance range, and thus the SN ratio of the integrated spectrum stored in the integrated spectrum storage unit 12d does not decrease due to integration of the first integrated spectrum in which the SN ratio is not greater than or equal to the third threshold value.

Eighth Embodiment

An eighth embodiment is an embodiment in which the first embodiment is modified such that the second integrated spectrum having the SN ratio greater than the SN ratio of an integrated spectrum stored in the integrated spectrum storage unit is stored in the integrated spectrum storage unit. The method (a1), the method (b1) and the method (c3) are used in the eighth embodiment.

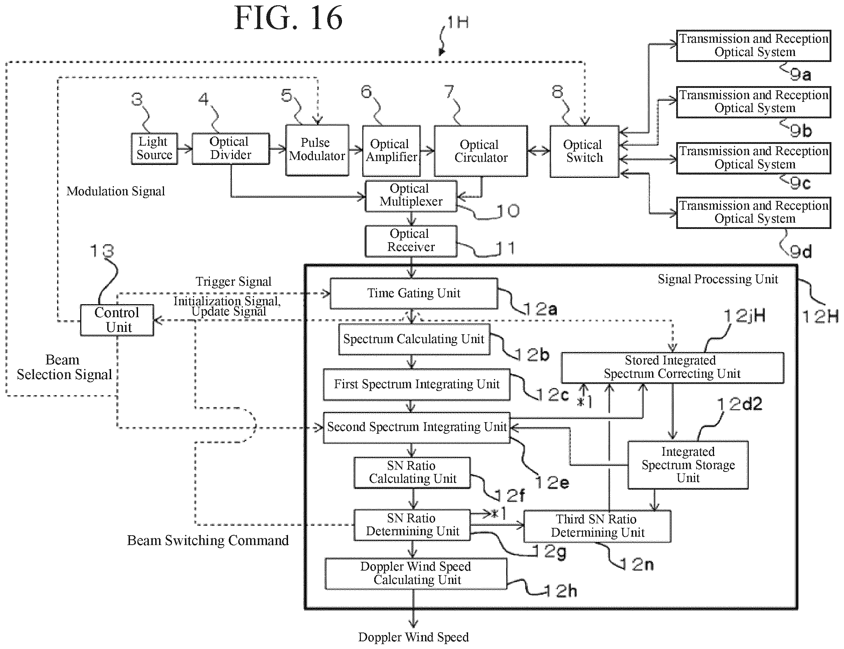

FIG. 16 is a schematic diagram illustrating the configuration of a wind measurement lidar device according to the eighth embodiment. In FIG. 16, points that are different from FIG. 1 of the first embodiment are described.

A wind measurement lidar device 1H includes a signal processing unit 12H. The signal processing unit 12H includes a third SN ratio determining unit 12n in addition to the SN ratio determining unit 12g. An integrated spectrum storage unit 12d2 and a stored integrated spectrum correcting unit 12jH are modified. The integrated spectrum storage unit 12d2 also stores the SN ratio of an integrated spectrum together with the integrated spectrum. When storing an integrated spectrum, the stored integrated spectrum correcting unit 12jH also stores the SN ratio of the integrated spectrum. The SN ratio may not be stored in the integrated spectrum storage unit, and the SN ratio may be determined by calculation from the integrated spectrum read from the integrated spectrum storage unit.

The third SN ratio determining unit 12n operates when the SN ratio determining unit 12g determines that the SN ratio of the second integrated spectrum is not greater than or equal to the first threshold value. The third SN ratio determining unit 12n determines whether or not the SN ratio of the second integrated spectrum is greater than the SN ratio (stored spectrum SN ratio) of the integrated spectrum stored in the integrated spectrum storage unit 12d2. When the SN ratio of the second integrated spectrum is greater than the stored spectrum SN ratio, the stored integrated spectrum correcting unit 12jH stores the second integrated spectrum and the SN ratio thereof into the integrated spectrum storage unit 12d2. When the SN ratio of the second integrated spectrum is not greater than the stored spectrum SN ratio, the stored integrated spectrum correcting unit 12jH does not store the second integrated spectrum into the integrated spectrum storage unit 12d2. The integrated spectrum storage unit 12d2 continues to store the integrated spectrum that is stored.

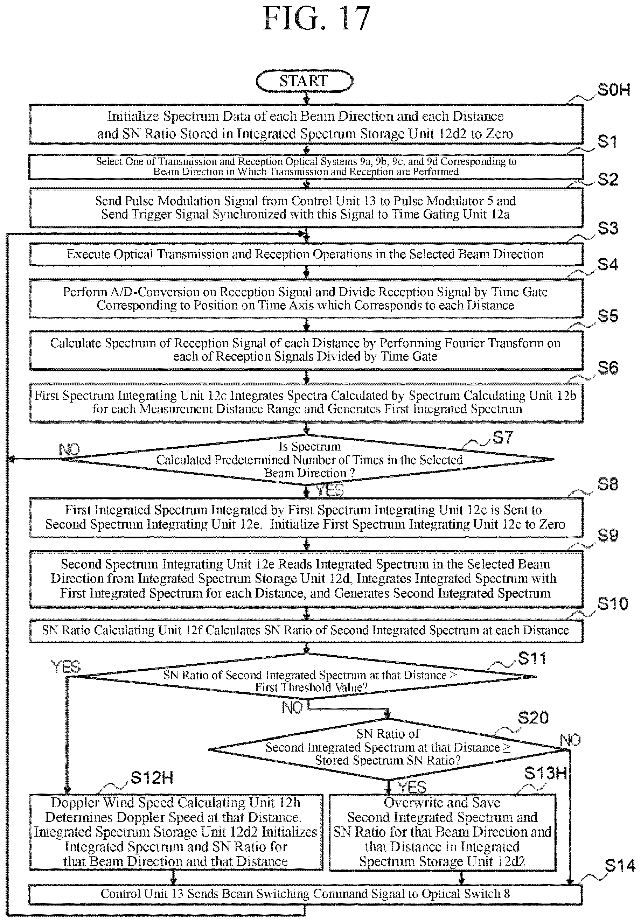

FIG. 17 is a flowchart illustrating the operation of the wind measurement lidar device according to the eighth embodiment. In FIG. 17, points that are different from FIG. 3 of the first embodiment are described. Steps S0H, Steps S12H and S13H are modified. Step S20 is added before S13H.

In S0H, the stored integrated spectrum correcting unit 12jH initializes spectrum data and the SN ratio regarding each beam direction and each distance stored in the integrated spectrum storage unit 12d2 to zero.

For the distance in which the SN ratio of the second integrated spectrum is greater than or equal to the first threshold value (YES in S11), the process proceeds to S12H. In S12H, the Doppler wind speed calculating unit 12h determines the Doppler frequency shift from the peak frequency of the second integrated spectrum and determines the Doppler wind speed (wind speed) corresponding to the Doppler frequency shift. Furthermore, the control unit 13 sends an initialization signal to the stored integrated spectrum correcting unit 12jH, and the stored integrated spectrum correcting unit 12jH initializes (resets to zero) the value of the spectrum data and the SN ratio thereof regarding the beam direction and the distance range (wind speed measurement section) for which the wind speed is calculated, the value of the spectrum data and the SN ratio thereof being stored in the integrated spectrum storage unit 12d2.

For the distance in which the SN ratio of the second integrated spectrum is not greater than or equal to the first threshold value (NO in S11), the process proceeds to S20. In S20, it is checked whether or not the SN ratio of the second integrated spectrum is greater than the stored spectrum SN ratio. If the SN ratio of the second integrated spectrum is greater than the stored spectrum SN ratio (YES in S20), in S13H, the integrated spectrum storage unit 12d2 is overwritten with the second integrated spectrum and the SN ratio thereof as the integrated spectrum of that beam direction and that distance. The SN ratio of the second integrated spectrum is also overwritten and stored. If the SN ratio of the second integrated spectrum is not greater than the stored spectrum SN ratio (NO in S20), the process proceeds to S14. When no integrated spectrum is stored in the integrated spectrum storage unit 12d2, it is judged to be YES in S20.

The wind measurement lidar device 1H operates similarly to the wind measurement lidar device 1. The wind measurement lidar device 1H can measure the wind speed in each direction and at each distance with high accuracy. In addition, the measurement rate does not decrease in a distance range of a short distance. In addition, the number of times of generating the first integrated spectrum can be reduced.

In the wind measurement lidar device 1H, the second integrated spectrum having the SN ratio greater than the SN ratio of the integrated spectrum stored in the integrated spectrum storage unit 12d2 is stored in the integrated spectrum storage unit 12d2. Therefore, the wind measurement lidar device 1H does not lower the SN ratio of the integrated spectrum stored in the integrated spectrum storage unit 12d2. Therefore, the wind measurement lidar device 1H can make the SN ratio of the integrated spectrum, which is used when the wind speed is calculated, greater than that of the wind measurement lidar device 1 and can calculate the wind speed more accurately. Since it is possible to improve the SN ratio of the integrated spectrum stored in the integrated spectrum storage unit 12d2, the wind measurement lidar device 1H can reduce the number of times of generating the first integrated spectrum before calculation of the wind speed to less than that of the wind measurement lidar device 1.


Ninth Embodiment

A ninth embodiment is an embodiment in which the sixth embodiment is modified so that whether or not to further integrate first integrated spectrum is not determined for each beam direction but for each distance range. The method (a2), the method (b2) and the method (c5) are used in the ninth embodiment.

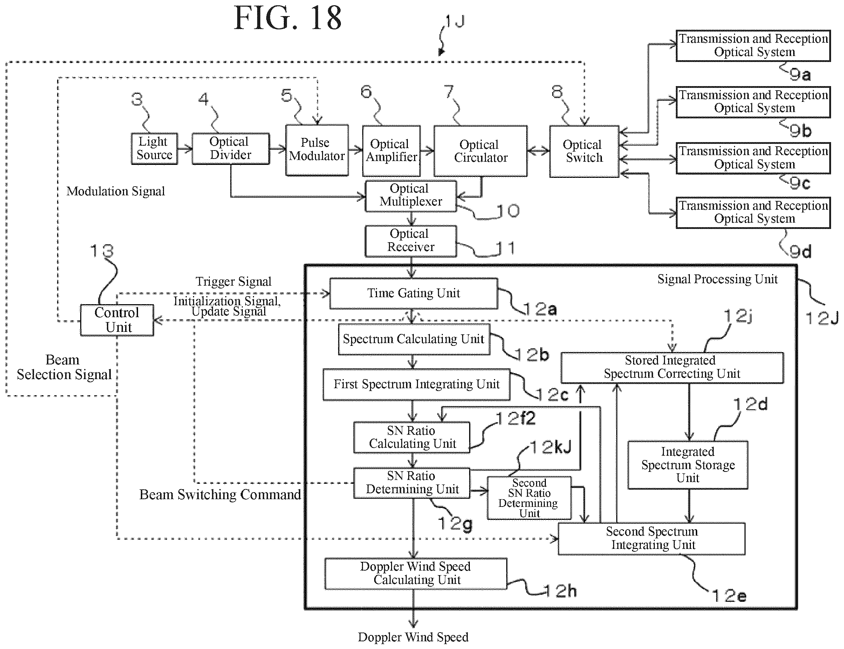

FIG. 18 is a schematic diagram illustrating the configuration of a wind measurement lidar device according to the ninth embodiment. In FIG. 18, points that are different from FIG. 12 of the sixth embodiment are described.

A wind measurement lidar device 1J includes a signal processing unit 12J. The signal processing unit 12J includes a second SN ratio determining unit 12kJ. The second SN ratio determining unit 12kJ determines whether or not the SN ratio of the first integrated spectrum is greater than or equal to the second threshold value individually in each beam direction and each distance range. The second threshold value is determined so as to be smaller than the first threshold value used by the SN ratio determining unit 12g. The second threshold value is determined in a similar manner to that in the sixth embodiment.

When the SN ratio of the first integrated spectrum is greater than or equal to the second threshold value, the second spectrum integrating unit 12e integrates the first integrated spectrum with an integrated spectrum stored in the integrated spectrum storage unit 12d to generate the second integrated spectrum. Otherwise, the second spectrum integrating unit 12e does not integrate the first integrated spectrum with an integrated spectrum stored in the integrated spectrum storage unit 12d. When the integration is not performed, the integrated spectrum stored in the integrated spectrum storage unit 12d is not changed. The integrated spectrum storage unit 12d stores the stored integrated spectrum that is stored before the first spectrum integrating unit 12c generating the first integrated spectrum.

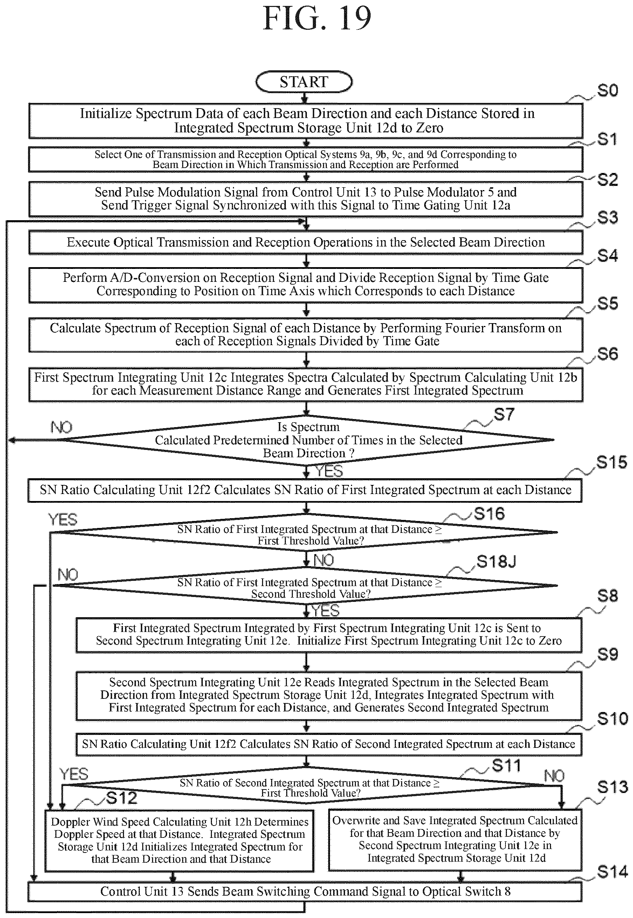

FIG. 19 is a flowchart illustrating the operation of the wind measurement lidar device according to the ninth embodiment. In FIG. 19, points that are different from FIG. 13 of the sixth embodiment are described. S0 is not modified. Between S16 and S8, step S18J is added instead of S18.

In S16, the process proceeds to S18J for a distance range in which no wind speed is calculated (NO in S16) since the SN ratio is smaller than the first threshold value. In S18J, it is checked whether or not the SN ratio of the first integrated spectrum is greater than or equal to the second threshold value. If the SN ratio of the first integrated spectrum is greater than or equal to the second threshold value (YES in S18J), the process proceeds to S8. In S8, the first integrated spectrum is sent to the second spectrum integrating unit 12e. If the SN ratio of the first integrated spectrum is not greater than or equal to the second threshold value (NO in S 18J), the process proceeds to S14 in order to emit a beam of laser light in a next beam direction without using the first integrated spectrum for integration with the second integrated spectrum.

The wind measurement lidar device 1J operates similarly to the wind measurement lidar device 1F. The wind measurement lidar device 1H can measure the wind speed in each direction and at each distance with high accuracy. In addition, the measurement rate does not decrease in a distance range of a short distance.

Since the first integrated spectrum having a low SN ratio is not integrated into the second integrated spectrum, the SN ratio of the integrated spectrum stored in the integrated spectrum storage unit 12d does not decrease. Therefore, it is possible to reduce the number of times of generating the first integrated spectrum until the SN ratio of the second integrated spectrum becomes greater than or equal to the first threshold value.

Tenth Embodiment.

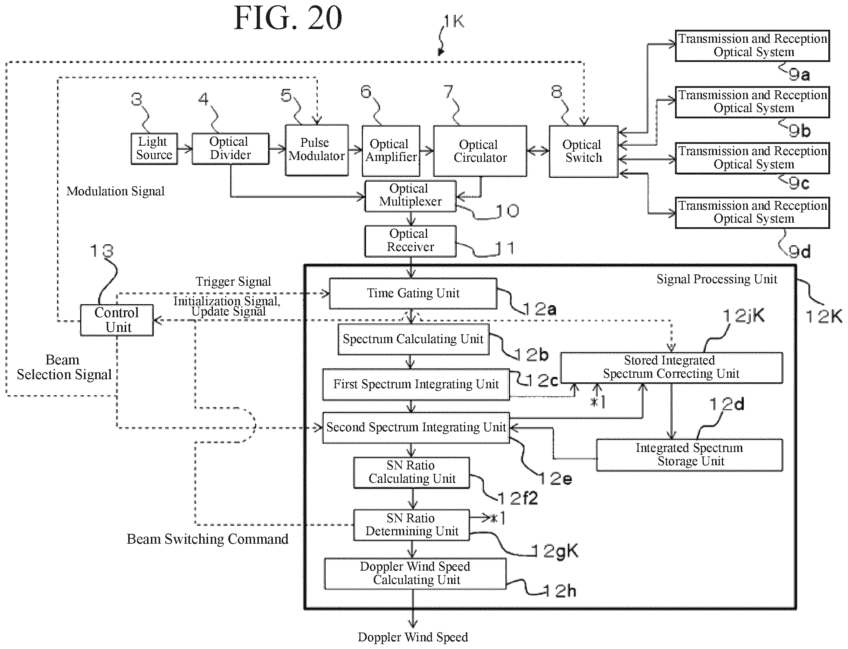

A tenth embodiment is an embodiment in which the first embodiment is modified so that it is determined whether or not the SN ratio of a higher SN ratio integrated spectrum, which is either one of the first integrated spectrum or the second integrated spectrum having a higher SN ratio, is greater than or equal to the first threshold value and that the wind speed is calculated from the higher SN ratio integrated spectrum having the SN ratio greater than or equal to the first threshold value. The method (a6), the method (b1) and the method (c2) are used in the tenth embodiment. FIG. 20 is a schematic diagram illustrating a configuration of a wind measurement lidar device according to the tenth embodiment. In FIG. 20, points that are different from FIG. 1 of the first embodiment are described.

A wind measurement lidar device 1K includes a signal processing unit 12K. The signal processing unit 12K includes an SN ratio calculating unit 12f2, an SN ratio determining unit 12gK, and a stored integrated spectrum correcting unit 12jK. The SN ratio calculating unit 12f2 calculates the SN ratios of the first integrated spectrum integrated by the first spectrum integrating unit 12c and the second integrated spectrum integrated by the second spectrum integrating unit 12e. The SN ratio determining unit 12gK determines which of the first integrated spectrum and the second integrated spectrum is the higher SN ratio integrated spectrum and determines whether or not the SN ratio of the higher SN ratio integrated spectrum is greater than or equal to the first threshold value. The higher SN ratio integrated spectrum may be determined by a component other than the SN ratio determining unit 12gK.

When the SN ratio of the higher SN ratio integrated spectrum is greater than or equal to the first threshold value, the Doppler wind speed calculating unit 12h calculates the Doppler wind speed. When the SN ratio of the higher SN ratio integrated spectrum is not greater than or equal to the first threshold value, the stored integrated spectrum correcting unit 12jK stores the higher SN ratio integrated spectrum into the integrated spectrum storage unit 12d. That is, when the Doppler wind speed calculating unit 12h does not calculate the Doppler wind speed, the stored integrated spectrum correcting unit 12jK stores the higher SN ratio integrated spectrum into the integrated spectrum storage unit 12d.

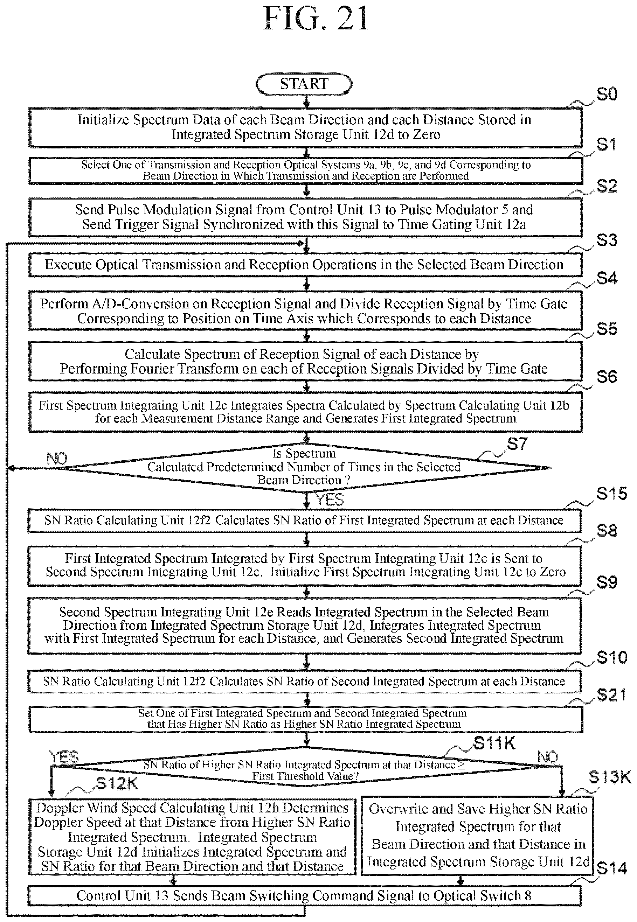

FIG. 21 is a flowchart illustrating the operation of the wind measurement lidar device according to the tenth embodiment. In FIG. 21, points that are different from FIG. 4 of the first embodiment are described. S15 is added between S7 and S8, and step S21 is added after S10. Furthermore, steps S11K, S12K, and S13K are modified.

If the spectrum is calculated the predetermined number of times (YES in S7), in S15, the SN ratio calculating unit 12f2 calculates the SN ratio of the first integrated spectrum at each distance integrated by the first spectrum integrating unit 12c.

In S10, the SN ratio calculating unit 12f2 calculates the SN ratio of the second integrated spectrum at each distance integrated by the second spectrum integrating unit 12e. In S21, either one of the first integrated spectrum or the second integrated spectrum having a higher SN ratio is determined to be the higher SN ratio integrated spectrum.

In S11K, it is checked whether or not the SN ratio of the higher SN ratio integrated spectrum is greater than or equal to the first threshold value for each distance. At a distance in which the SN ratio of the higher SN ratio integrated spectrum is greater than or equal to the first threshold value (YES in S11K), the process proceeds to S12K. In S12K, the Doppler wind speed calculating unit 12h determines the Doppler frequency shift from the peak frequency of the higher SN ratio integrated spectrum and determines the Doppler wind speed (wind speed) corresponding to the Doppler frequency shift. Furthermore, the control unit 13 sends an initialization signal to the stored integrated spectrum correcting unit 12j, and the stored integrated spectrum correcting unit 12j initializes (resets to zero) the value of the spectrum data regarding the beam direction and the distance range (wind speed measurement section) for which the wind speed is calculated, the value of the spectrum data being stored in the integrated spectrum storage unit 12d.

At a distance in which the SN ratio of the higher SN ratio integrated spectrum is not greater than or equal to the first threshold value (NO in S11K), the process proceeds to S13K. In S13K, the integrated spectrum storage unit 12d is overwritten with the higher SN ratio integrated spectrum as the integrated spectrum of that beam direction and that distance. That is, when the Doppler wind speed calculating unit 12h does not calculate the Doppler wind speed, the stored integrated spectrum correcting unit 12jK stores the higher SN ratio integrated spectrum into the integrated spectrum storage unit 12d.

The wind measurement lidar device 1K operates similarly to the wind measurement lidar device 1. The wind measurement lidar device 1K can measure the wind speed in each direction and at each distance with high accuracy. In addition, the measurement rate does not decrease in a distance range of a short distance.

By calculating the wind speed from the higher SN ratio integrated spectrum, which is either one of the first integrated spectrum or the second integrated spectrum having a larger SN ratio, it becomes possible to calculate the wind speed from the integrated spectrum having a higher SN ratio as compared with the method of calculating the wind speed by using either the first integrated spectrum or the second integrated spectrum preferentially, and thus the accuracy of the wind speed that is calculated is improved.

Since the higher SN ratio integrated spectrum is stored in the integrated spectrum storage unit 12d, the SN ratio of the integrated spectrum stored in the integrated spectrum storage unit 12d for second and subsequent times is greater than that when the second integrated spectrum is always stored. Since the SN ratio of the integrated spectrum stored in the integrated spectrum storage unit 12d increases, the number of times of generating the first integrated spectrum, until the wind speed can be calculated, decreases.

Eleventh Embodiment

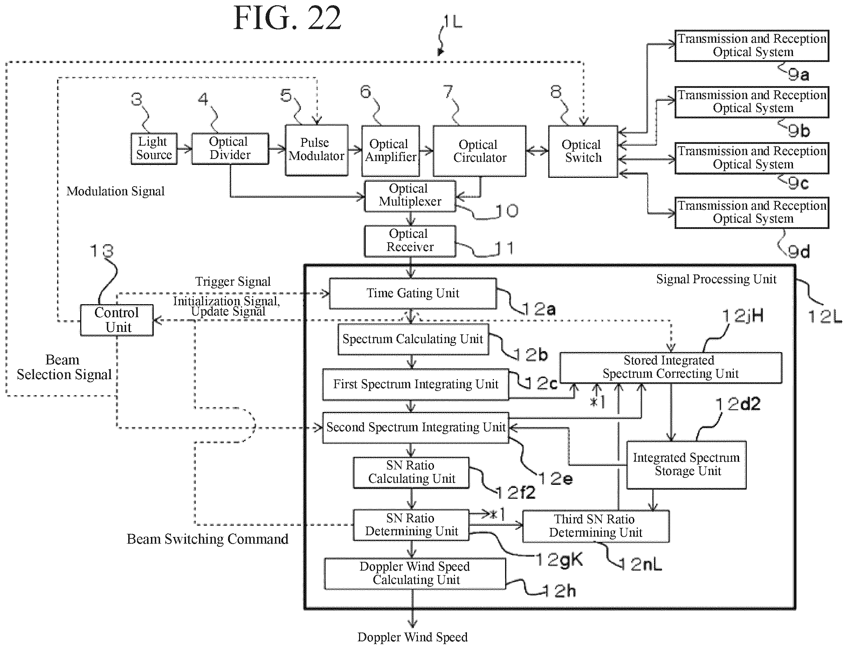

An eleventh embodiment is an embodiment in which the tenth embodiment is modified such that, when the SN ratio of the higher SN ratio integrated spectrum is greater than the SN ratio of a stored integrated spectrum stored in the integrated spectrum storage unit, the higher SN ratio integrated spectrum is stored in the integrated spectrum storage unit. The method (a6), the method (b1) and the method (c4) are used in the eleventh embodiment. FIG. 22 is a schematic diagram illustrating the configuration of a wind measurement lidar device according to the eleventh embodiment. In FIG. 22, points that are different from FIG. 20 of the tenth embodiment are described.

The wind measurement lidar device 1L includes a signal processing unit 12L. The signal processing unit 12L includes a third SN ratio determining unit 12nL in addition to the SN ratio determining unit 12gK. Similarly to the eighth embodiment, the integrated spectrum storage unit 12d2 and the stored integrated spectrum correcting unit 12jH are modified. The integrated spectrum storage unit 12d2 also stores the SN ratio of an integrated spectrum together with the integrated spectrum. The stored integrated spectrum correcting unit 12jH also stores the SN ratio when storing an integrated spectrum.

The third SN ratio determining unit 12nL operates when the SN ratio determining unit 12gK determines that the SN ratio of the higher SN ratio integrated spectrum is not greater than or equal to the first threshold value. That is, the third SN ratio determining unit 12nL operates when the Doppler wind speed calculating unit 12h does not calculate the Doppler wind speed. The third SN ratio determining unit 12nL determines whether or not the SN ratio of the higher SN ratio integrated spectrum is greater than the stored spectrum SN ratio. When the SN ratio of the higher SN ratio integrated spectrum is greater than the stored spectrum SN ratio, the stored integrated spectrum correcting unit 12jH stores the higher SN ratio integrated spectrum, together with the SN ratio thereof, into the integrated spectrum storage unit 12d2. That is, when the Doppler wind speed calculating unit 12h does not calculate the Doppler wind speed, and the SN ratio of the higher SN ratio integrated spectrum is greater than the SN ratio of the stored integrated spectrum, the stored integrated spectrum correcting unit 12j stores the higher SN ratio integrated spectrum into the integrated spectrum storage unit 12d2.

When the SN ratio of the higher SN ratio integrated spectrum is not greater than the stored spectrum SN ratio, the stored integrated spectrum correcting unit 12jH does not store the higher SN ratio integrated spectrum into the integrated spectrum storage unit 12d2. The integrated spectrum storage unit 12d2 continues to store the integrated spectrum that is stored. When the SN ratio of the higher SN ratio integrated spectrum is equal to the stored spectrum SN ratio, the stored integrated spectrum correcting unit 12j may store the higher SN ratio integrated spectrum into the integrated spectrum storage unit 12d2. When the Doppler wind speed calculating unit 12h does not calculate the Doppler wind speed, and the SN ratio of the higher SN ratio integrated spectrum is lower than the SN ratio of the stored integrated spectrum, the stored integrated spectrum correcting unit 12j may store the higher SN ratio integrated spectrum into the integrated spectrum storage unit 12d2.

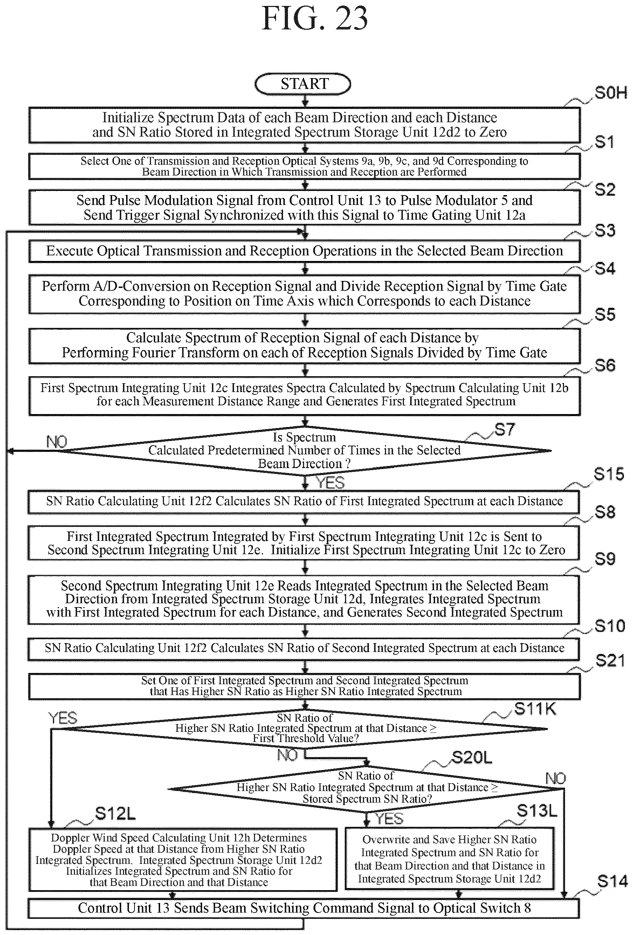

FIG. 23 is a flowchart illustrating the operation of the wind measurement lidar device according to the eleventh embodiment. In FIG. 23, points that are different from FIG. 21 of the tenth embodiment are described. Steps S0H, S12L, and S13L are modified, and step S20L is added before S13L.

Similarly to the wind measurement lidar device 1H, in S0H, the stored integrated spectrum correcting unit 12jH initializes spectrum data and the SN ratio regarding each beam direction and each distance stored in the integrated spectrum storage unit 12d2 to zero.

At a distance in which the SN ratio of the higher SN ratio integrated spectrum is greater than or equal to the first threshold value (YES in S11K), the process proceeds to S12L. In S12L, the Doppler wind speed calculating unit 12h determines the Doppler frequency shift from the peak frequency of the higher SN ratio integrated spectrum and determines the Doppler wind speed (wind speed) corresponding to the Doppler frequency shift. Furthermore, the control unit 13 sends an initialization signal to the stored integrated spectrum correcting unit 12jH, and the stored integrated spectrum correcting unit 12jH initializes (resets to zero) the value of the spectrum data and the SN ratio thereof regarding the beam direction and the distance range (wind speed measurement section) for which the wind speed is calculated, the value of the spectrum data and the SN ratio thereof being stored in the integrated spectrum storage unit 12d2.

At a distance in which the SN ratio of the higher SN ratio integrated spectrum is not greater than or equal to the first threshold value (NO in S11K), the process proceeds to S20L. In S20L, it is checked whether or not the SN ratio of the higher SN ratio integrated spectrum is greater than the stored spectrum SN ratio. If the SN ratio of the higher SN ratio integrated spectrum is greater than the stored spectrum SN ratio (YES in S20L), in S13L, the integrated spectrum storage unit 12d2 is overwritten with the higher SN ratio integrated spectrum and the SN ratio as the integrated spectrum and the SN ratio of the beam direction and the distance. If the SN ratio of the higher SN ratio integrated spectrum is not greater than the stored spectrum SN ratio (NO in S20L), the process proceeds to S14. If no integrated spectrum is stored in the integrated spectrum storage unit 12d2, it is judged to be YES in S20L.

The wind measurement lidar device 1L operates similarly to the wind measurement lidar device 1K. The wind measurement lidar device 1L can measure the wind speed in each direction and at each distance with high accuracy. In addition, the measurement rate does not decrease in a distance range of a short distance. By calculating the wind speed from the higher SN ratio integrated spectrum, it becomes possible to calculate the wind speed from the integrated spectrum having a higher SN ratio as compared with either the method of calculating the wind speed only from the second integrated spectrum or the method of calculating the wind speed by using the first integrated spectrum preferentially, and thus the accuracy of the wind speed that is calculated is improved.

Since the higher SN ratio integrated spectrum is stored in the integrated spectrum storage unit 12d2 only when the SN ratio is greater than that of the integrated spectrum stored in the integrated spectrum storage unit 12d2, the SN ratio of the integrated spectrum stored in the integrated spectrum storage unit 12d2 does not decrease. Since the SN ratio of the integrated spectrum stored in the integrated spectrum storage unit 12d2 increases, the number of times of generating the first integrated spectrum, until the wind speed can be calculated, decreases.

A free combination of the embodiments, or a modification of the embodiments, or omission of some components, or a free combination of the embodiments in which some components are omitted or modified can be made.

REFERENCE SIGNS LIST

1, 1A, 1B, 1C, 1D, 1E, 1F, 0F, 1G, 1H, 1J, 1K, 1L: wind measurement lidar device, 2: wind turbine, 3: light source, 4: optical divider, 5: pulse modulator, 6: optical amplifier, 7: optical circulator, 8: optical switch (beam switching unit), 9, 9a, 9b, 9c, 9d: transmission and reception optical system (beam switching unit), 10: optical multiplexer (reception detection unit), 11: optical receiver (reception detection unit), 12, 12D, 12E, 12F, 12G, 12H, 12J, 12K, 12L: signal processing unit, 12a: time gating unit (reception signal dividing unit), 12b: spectrum calculating unit, 12c: first spectrum integrating unit (spectrum integrating unit), 12d, 12d2: integrated spectrum storage unit, 12e: second spectrum integrating unit (spectrum integrating unit), 12f, 12f2: SN ratio calculating unit, 12g, 12gK: SN ratio determining unit, 12h: Doppler wind speed calculating unit (wind speed calculating unit), 12j, 12jD, 12jH, 12jK: stored integrated spectrum correcting unit, 12k, 12kG, 12kJ: second SN ratio determining unit, 12n, 12nL: third SN ratio determining unit, 13: control unit, 14: wavelength-switchable light source (light source, beam switching unit), 15: wavelength-division optical multiplexer (beam switching unit), 16, 16C: wind speed predicting unit (incoming wind information predicting unit), 16a: Doppler wind speed storage unit, 16b: incoming wind speed predicting unit, 16c: shear predicting unit, 16d: weighting coefficient storing unit, 16e: incoming wind speed storing unit, 16f: shear storing unit, 16g: weighting coefficient for incoming wind speed prediction, 16h: shear prediction weighting coefficient, 17: beam direction storing unit, 18: wind direction measuring unit (incoming wind information predicting unit)

**Claims**

1. A wind measurement lidar device mounted on a wind turbine and to transmit transmission light being pulses of laser light into atmosphere in a plurality of beam directions determined with respect to a front direction of the wind turbine and to measure a wind speed at each of a plurality of distances from the wind turbine in each of the plurality of beam directions from a Doppler frequency shift of reflection light with respect to the transmission light, the reflection light being the transmission light reflected by particles moving together with the atmosphere, the wind measurement lidar device comprising:

    a spectrum calculating unit to calculate a spectrum by performing a Fourier transform on each of a plurality of divided reception signals obtained by dividing a reception signal generated from the reflection light by a plurality of time intervals, the plurality of time intervals are determined in accordance with the plurality of distances respectively;
    a spectrum integrating unit to obtain an integrated spectrum for each of a plurality of wind speed measurement sections by integrating the spectra obtained from the plurality of divided reception signals for at least a part of a plurality of the pulses transmitted after the wind speed is calculated in a previous time for each of the plurality of wind speed measurement sections, each of the plurality of wind speed measurement sections being a combination of each of the plurality of beam directions and each of the plurality of time intervals;
    an SN ratio calculating unit to calculate an SN ratio of the integrated spectrum;
    a wind speed calculating unit to calculate the wind speed in each of the plurality of wind speed measurement sections from the integrated spectrum having the SN ratio greater than or equal to a first threshold value; and
    an incoming wind information predicting unit to predict incoming wind information being information of incoming wind based on the wind speed in each of the plurality of wind speed measurement sections, the incoming wind being wind arriving at and coming to the wind turbine.

2. The wind measurement lidar device according to claim 1, wherein the spectrum integrating unit integrates collectively, for each of the plurality of beam directions, the spectra calculated from the plurality of divided reception signals in the plurality of time intervals corresponding to a plurality of the distances that are classified as a long distance.

3. The wind measurement lidar device according to claim 1 or 2, wherein, when the SN ratios of the integrated spectra in all of the plurality of wind speed measurement sections having a same distance and a same altitude satisfy a condition for calculating the wind speed, the wind speed calculating unit calculates the wind speed in all of the plurality of wind speed measurement sections having the same distance and the same altitude.

4. The wind measurement lidar device according to any one of claims 1 to 3, wherein the incoming wind information predicting unit includes an incoming wind speed predicting unit to predict an incoming wind speed being a wind speed of the incoming wind.

5. The wind measurement lidar device according to claim 4, wherein the incoming wind speed predicting unit predicts an incoming wind speed at the wind turbine by performing weighted averaging on the wind speeds of the plurality of wind speed measurement sections.

6. The wind measurement lidar device according to any one of claim 4 or 5, wherein the incoming wind speed predicting unit calculates a plurality of distance wind speeds and predicts the incoming wind speed by weighted averaging of the plurality of distance wind speeds, each of the plurality of distance wind speeds being a wind speed calculated from the wind speeds for the plurality of wind speed measurement sections at a same distance.

7. The wind measurement lidar device according to any one of claim 4 or 5, wherein the incoming wind speed predicting unit calculates a plurality of distance wind speeds and predicts the incoming wind speed by averaging the plurality of distance wind speeds, each of the plurality of distance wind speeds being a wind speed calculated by weighted averaging of the wind speeds for the plurality of wind speed measurement sections at a same distance.

8. The wind measurement lidar device according to claim 6 or 7,

wherein the plurality of beam directions are determined so that the number of other beam directions having a same elevation angle as an elevation angle of each of the plurality of beam directions is same and greater than or equal to one, for each elevation angle, and

when calculating each of the plurality of distance wind speeds, the incoming wind speed predicting unit gives, to the plurality of beam directions at an elevation angle in which the number of the plurality of beam directions in which the wind speed is calculated is small, a greater weighting coefficient used for weighted averaging than the weighting coefficients for the plurality of beam directions at other elevation angles.

9. The wind measurement lidar device according to any one of claims 6 to 8, wherein a weighting coefficient for incoming wind speed prediction used by the incoming wind speed predicting unit to predict the incoming wind speed is determined to be larger when the number of times of integration of the integrated spectrum is smaller and is determined to be smaller when the number of times of integration is larger.

10. The wind measurement lidar device according to any one of claims 4 to 8,

wherein each of the plurality of the beam directions is determined so that the number of other beam directions having a same elevation angle as an elevation angle of each of the plurality of beam directions is same and greater than or equal to one,

the incoming wind information predicting unit further includes a shear predicting unit to predict a shear being a rate of change in an altitude direction of a component in a front direction of the wind turbine of the wind speed calculated from the wind speeds that are measured in the plurality of wind speed measurement sections having the same distance but different altitudes, and

when there is a non-measurement elevation angle being an elevation angle at which there is no beam direction in which the wind speed is calculated, the incoming wind speed predicting unit predicts the incoming wind speed using a wind speed at the non-measurement elevation angle estimated based on the wind speed measured in the beam direction having an elevation angle adjacent to the non-measurement elevation angle and the shear predicted most recently.

11. The wind measurement lidar device according to any one of claims 1 to 9, wherein the incoming wind information predicting unit includes a shear predicting unit to predict a shear being a rate of change in an altitude direction of a component in a front direction of the wind turbine of the wind speed calculated from the wind speeds that are measured in the plurality of wind speed measurement sections having the same distance but different altitudes.

12. The wind measurement lidar device according to claim 10 or 11, wherein the shear predicting unit predicts an average shear obtained by calculating the shears at the plurality of distances and performing weighted averaging on the shears.

13. The wind measurement lidar device according to claim 12, wherein the shear predicting unit predicts a plurality of distance shears, and predicts the average shear by weighted averaging of the plurality of distance shears, each of the plurality of distance shears being the shear at each of the plurality of distances.

14. The wind measurement lidar device according to claim 12, wherein the shear predicting unit predicts the average shear by predicting a plurality of distance shears and averaging the plurality of distance shears, each of the plurality of distance shears being the shear at each of the plurality of distances and being predicted based on the wind speeds, being weighted, of the plurality of wind speed measurement sections.

15. The wind measurement lidar device according to any one of claims 12 to 14, wherein a shear prediction weighting coefficient used by the shear predicting unit to predict the average shear is determined to be larger when the number of times of integration of the integrated spectrum is smaller and is determined to be smaller when the number of times of integration is larger.

16. The wind measurement lidar device according to any one of claims 1 to 15, wherein the incoming wind information predicting unit includes a wind direction measuring unit to calculate a wind vector based on a plurality of the wind speeds measured for the plurality of wind speed measurement sections in the plurality of beam directions corresponding to the distances that are twice or more of a rotor diameter of the wind turbine and a plurality of beam direction vectors, each of the plurality of beam direction vectors representing each of the plurality of beam directions and to measure a wind direction from the wind vector.

# FIG. 1

EP 3 955 029 A1

# FIG. 2

Beam 1

Beam 2

$\theta 2$ $\theta 1$

Front Direction of Wind Turbine

$\theta 3$

Beam 3

$\theta 4$

Beam 4

Range 1

Range 2

Short Distance: d1

Long Distance: d2

EP 3 955 029 A1

# FIG. 3

START                                                                    S0

Initialize Spectrum Data of each Beam Direction and each Distance Stored in
Integrated Spectrum Storage Unit 12d to Zero                             S1

Select One of Transmission and Reception Optical Systems 9a, 9b, 9c, and 9d Corresponding
to Beam Direction in Which Transmission and Reception are Performed       S2

Send Pulse Modulation Signal from Control Unit 13 to Pulse Modulator 5 and
Send Trigger Signal Synchronized with this Signal to Time Gating Unit 12a S3

Execute Optical Transmission and Reception Operations in the Selected Beam Direction S4

Perform A/D-Conversion on Reception Signal and Divide Reception Signal by Time Gate
Corresponding to Position on Time Axis which Corresponds to each Distance  S5

Calculate Spectrum of Reception Signal of each Distance by
Performing Fourier Transform on each of Reception Signals Divided by Time Gate S6

First Spectrum Integrating Unit 12c Integrates Spectra Calculated by Spectrum Calculating
Unit 12b for each Measurement Distance Range and Generates First Integrated Spectrum

Is Spectrum                                S7
Calculated Predetermined Number of Times in the Selected
Beam Direction ?

NO

YES                                                                      S8

First Integrated Spectrum Integrated by First Spectrum Integrating Unit 12c is Sent to
Second Spectrum Integrating Unit 12e. Initialize First Spectrum Integrating Unit 12c to Zero S9

Second Spectrum Integrating Unit 12e Reads Integrated Spectrum in the Selected Beam
Direction from Integrated Spectrum Storage Unit 12d, Integrates Integrated Spectrum with
First Integrated Spectrum for each Distance, and Generates Second Integrated Spectrum S10

SN Ratio Calculating Unit 12f Calculates SN Ratio of Second Integrated Spectrum at each Distance

SN Ratio of                                S11
Second Integrated Spectrum at that Distance ≥
First Threshold Value?

YES                                                          NO

S12                                                                      S13

Doppler Wind Speed Calculating Unit 12h      Overwrite and Save Integrated Spectrum
Determines Doppler Speed at that Distance.   Calculated for that Beam Direction and
Integrated Spectrum Storage Unit 12d         that Distance by Second Spectrum
Initializes Integrated Spectrum for          Integrating Unit 12e in Integrated
that Beam Direction and that Distance        Spectrum Storage Unit 12d                S14

Control Unit 13 Sends Beam Switching Command Signal to Optical Switch 8

# FIG. 4

```
                        ┌─────────────────┐
                        │      START      │
                        └─────────────────┘
                                 │                                    S3A
┌─────────────────────────────────────────────────────────────────────┐
│  Optical Divider 4 Divides into Local Light and Transmission Light,   │
│  Sends Local Light to Optical Multiplexer 10, and Sends Transmission  │
│  Light to Pulse Modulator 5                                           │
└─────────────────────────────────────────────────────────────────────┘
                                 │                                    S3B
┌─────────────────────────────────────────────────────────────────────┐
│  Pulse Modulator 5 Pulse-Modulates and Applies Optical Frequency      │
│  Shift to Transmission Light and Generates Laser Light Having          │
│  Intermediate Frequency                                                │
└─────────────────────────────────────────────────────────────────────┘
                                 │                                    S3C
┌─────────────────────────────────────────────────────────────────────┐
│  Transmission Light Pulse-Modulated is Amplified by Optical Amplifier 6│
└─────────────────────────────────────────────────────────────────────┘
                                 │                                    S3D
┌─────────────────────────────────────────────────────────────────────┐
│  Transmission Light Amplified is Transmitted into Atmosphere from      │
│  One Transmission and Reception Optical System 9 that is selected from │
│  among Transmission and Reception Optical Systems 9a, 9b, 9c, and 9d   │
└─────────────────────────────────────────────────────────────────────┘
                                 │                                    S3E
┌─────────────────────────────────────────────────────────────────────┐
│  Reflection Light Scattered by Aerosol at Each Distance in Atmosphere │
│  is Received by One Transmission and Reception Optical System 9 that is│
│  Selected from Among Transmission and Reception Optical Systems        │
│  9a, 9b, 9c, and 9d                                                    │
└─────────────────────────────────────────────────────────────────────┘
                                 │                                    S3F
┌─────────────────────────────────────────────────────────────────────┐
│  Reception Light Received by Transmission and Reception Optical System │
│  9 that is Selected is Sent to Optical Multiplexer 10 via Optical      │
│  Switch 8 and Circulator 7                                            │
└─────────────────────────────────────────────────────────────────────┘
                                 │                                    S3G
┌─────────────────────────────────────────────────────────────────────┐
│  In Optical Multiplexer 10, Local Light and Reception Light are        │
│  Combined, which is Detected Coherently by Optical Receiver 11         │
└─────────────────────────────────────────────────────────────────────┘
                                 │                                    S3H
┌─────────────────────────────────────────────────────────────────────┐
│  Reception Signal that is Electrical Signal Generated by Detection     │
│  is Sent to Time Gating Unit 12a in Signal Processing Unit 12          │
└─────────────────────────────────────────────────────────────────────┘
                                 │
                        ┌─────────────────┐
                        │       END       │
                        └─────────────────┘
```

# FIG. 5

Modulation Signal 14

Wavelength-Switchable Light Source → Optical Divider 4 → Pulse Modulator 5 → Optical Amplifier 6 → Optical Circulator 7 → Wavelength-Division Optical Multiplexer 15

Transmission and Reception Optical System 9a
Transmission and Reception Optical System 9b
Transmission and Reception Optical System 9c
Transmission and Reception Optical System 9d

1A

Optical Multiplexer 10

Optical Receiver 11

13A

Trigger Signal
Initialization Signal, Update Signal

Control Unit

Beam Selection Signal

Signal Processing Unit

Time Gating Unit 12a

Spectrum Calculating Unit 12b

First Spectrum Integrating Unit 12c

Stored Integrated Spectrum Correcting Unit 12j

Second Spectrum Integrating Unit 12e

Integrated Spectrum Storage Unit 12d

SN Ratio Calculating Unit 12f

SN Ratio Determining Unit *1 12g

Beam Switching Command

Doppler Wind Speed Calculating Unit 12h

12

Doppler Wind Speed

EP 3 955 029 A1

FIG. 6

Light Source `3`

Optical Divider `4`

Pulse Modulator `5`

Optical Amplifier `6`

Optical Circulator `7`

Optical Switch `8`

`1B`

Transmission and Reception Optical System `9a`
Transmission and Reception Optical System `9b`
Transmission and Reception Optical System `9c`
Transmission and Reception Optical System `9d`

Modulation Signal

Optical Multiplexer `10`

Optical Receiver `11`

`13`

Trigger Signal

Initialization Signal, Update Signal

Control Unit

Beam Selection Signal

Signal Processing Unit

Time Gating Unit `12a`

Spectrum Calculating Unit `12b`

Stored Integrated Spectrum Correcting Unit `12j`

First Spectrum Integrating Unit `12c`

`*1`

`12`

Second Spectrum Integrating Unit `12d`

Integrated Spectrum Storage Unit `12e`

SN Ratio Calculating Unit `12f`

SN Ratio Determining Unit `*1`

Beam Switching Command

Doppler Wind Speed Calculating Unit `12g` `12h`

`16`

Doppler Wind Speed Storage Unit `16a` `16b`

Incoming Wind Speed Predicting Unit

Incoming Wind Speed Storing Unit `16e`

Weighting Coefficient Storing Unit `16g`

Weighting Coefficient for Incoming Wind Speed Prediction `16h`

`17`

Beam Direction Storing Unit

Shear Predicting Unit `16c`

Shear Storing Unit `16f`

Sear Prediction Weighting Coefficient `16d`

Wind Speed Predicting Unit

EP 3 955 029 A1

FIG. 7

# FIG. 8

Beam 1

Beam 2

1D

2

Front Direction of
Wind Turbine

θ2   θ1

θ3

Range 1

θ4

Beam 3

Range 2

Beam 4

Range 3

Short Distance: d1

Long Distance: d2

Long Distance: d3

# FIG. 9

FIG. 10

# FIG. 11

START
S0

Initialize Spectrum Data of each Beam Direction and each Distance Stored in
Integrated Spectrum Storage Unit 12d to Zero
S1

Select One of Transmission and Reception Optical Systems 9a, 9b, 9c, and 9d Corresponding to
Beam Direction in Which Transmission and Reception are Performed
S2

Send Pulse Modulation Signal from Control Unit 13 to Pulse Modulator 5 and
Send Trigger Signal Synchronized with this Signal to Time Gating Unit 12a
S3

Execute Optical Transmission and Reception Operations in the Selected Beam Direction
S4

Perform A/D-Conversion on Reception Signal and Divide Reception Signal by Time Gate
Corresponding to Position on Time Axis which Corresponds to each Distance
S5

Calculate Spectrum of Reception Signal of each Distance by
Performing Fourier Transform on each of Reception Signals Divided by Time Gate
S6

First Spectrum Integrating Unit 12c Integrates Spectra Calculated by Spectrum Calculating Unit 12b
for each Measurement Distance Range and Generates First Integrated Spectrum

NO ◄——— Is Spectrum
Calculated Predetermined Number of Times in the Selected
Beam Direction ?
S7

YES
S15

SN Ratio Calculating Unit 12f2 Calculates SN Ratio of First Integrated Spectrum at each Distance

YES ◄——— SN Ratio of First Integrated Spectrum at that Distance ≥
First Threshold Value?
S16

NO
S8

First Integrated Spectrum Integrated by First Spectrum Integrating Unit 12c is Sent to
Second Spectrum Integrating Unit 12e. Initialize First Spectrum Integrating Unit 12c to Zero
S9

Second Spectrum Integrating Unit 12e Reads Integrated Spectrum in the Selected Beam
Direction from Integrated Spectrum Storage Unit 12d, Integrates Integrated Spectrum
with First Integrated Spectrum for each Distance, and Generates Second Integrated Spectrum
S10

SN Ratio Calculating Unit 12f2 Calculates SN Ratio of Second Integrated Spectrum at each Distance
S11

YES ◄——— SN Ratio of Second Integrated Spectrum at that Distance ≥
First Threshold Value? ———► NO

S12                                                        S13

| Doppler Wind Speed Calculating Unit 12h Determines Doppler Speed at that Distance. Integrated Spectrum Storage Unit 12d Initializes Integrated Spectrum for that Beam Direction and that Distance | Overwrite and Save Integrated Spectrum Calculated for that Beam Direction and that Distance by Second Spectrum Integrating Unit 12e in Integrated Spectrum Storage Unit 12d |

S14

Control Unit 13 Sends Beam Switching Command Signal to Optical Switch 8

FIG. 12

# FIG. 13

START

SOF

Initialize Spectrum Data of each Beam Direction and each Distance Stored in Integrated Spectrum Storage Unit 12d to Zero. Set Determination Target Wind Speed Measurement Section for every Beam Direction

S1

Select One of Transmission and Reception Optical Systems 9a, 9b, 9c, and 9d Corresponding to Beam Direction in Which Transmission and Reception are Performed

S2

Send Pulse Modulation Signal from Control Unit 13 to Pulse Modulator 5 and Send Trigger Signal Synchronized with this Signal to Time Gating Unit 12a

S3

Execute Optical Transmission and Reception Operations in the Selected Beam Direction

S4

Perform A/D-Conversion on Reception Signal and Divide Reception Signal by Time Gate Corresponding to Position on Time Axis which Corresponds to each Distance

S5

Calculate Spectrum of Reception Signal of each Distance by Performing Fourier Transform on each of Reception Signals Divided by Time Gate

S6

First Spectrum Integrating Unit 12c Integrates Spectra Calculated by Spectrum Calculating Unit 12b for each Measurement Distance Range and Generates First Integrated Spectrum

S7

NO ← Is Spectrum Calculated Predetermined Number of Times in the Selected Beam Direction ?

YES

S15

SN Ratio Calculating Unit 12f2 Calculates SN Ratio of First Integrated Spectrum at each Distance

S17

Second SN Ratio Determining Unit 12k Determines Whether or Not the Number of Distance Ranges, Which are Included in Determination Target Wind Speed Measurement Section and Have SN Ratio of First Integrated Spectrum Greater than or Equal to Second Threshold Value, Is Greater than or Equal to Lower Limit Number and Stores Result in NDsum.

S16

YES ← SN Ratio of First Integrated Spectrum at that Distance ≥ First Threshold Value?

NO

S18

NO ← NDsum = YES ? → YES

S8

First Integrated Spectrum Integrated by First Spectrum Integrating Unit 12c is Sent to Second Spectrum Integrating Unit 12e. Initialize First Spectrum Integrating Unit 12c to Zero

S9

Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum

S10

SN Ratio Calculating Unit 12f2 Calculates SN Ratio of Second Integrated Spectrum at each Distance

S11

YES ← SN Ratio of Second Integrated Spectrum at that Distance ≥ First Threshold Value? → NO

S12

Doppler Wind Speed Calculating Unit 12h Determines Doppler Speed at that Distance. Integrated Spectrum Storage Unit 12d Initializes Integrated Spectrum for that Beam Direction and that Distance

S13

Overwrite and Save Integrated Spectrum Calculated for that Beam Direction and that Distance by Second Spectrum Integrating Unit 12e in Integrated Spectrum Storage Unit 12d

S14

Control Unit 13 Sends Beam Switching Command Signal to Optical Switch 8

# FIG. 14

# FIG. 15

START

SOF
IInitialize Spectrum Data of each Beam Direction and each Distance Stored in Integrated Spectrum Storage Unit 12d to Zero. Set Determination Target Wind Speed Measurement Section for every Beam Direction

S1
Select One of Transmission and Reception Optical Systems 9a, 9b, 9c, and 9d Corresponding to Beam Direction in Which Transmission and Reception are Performed

S2
Send Pulse Modulation Signal from Control Unit 13 to Pulse Modulator 5 and Send Trigger Signal Synchronized with this Signal to Time Gating Unit 12a

S3
Execute Optical Transmission and Reception Operations in the Selected Beam Direction

S4
Perform A/D-Conversion on Reception Signal and Divide Reception Signal by Time Gate Corresponding to Position on Time Axis which Corresponds to each Distance

S5
Calculate Spectrum of Reception Signal of each Distance by Performing Fourier Transform on each of Reception Signals Divided by Time Gate

S6
First Spectrum Integrating Unit 12c Integrates Spectra Calculated by Spectrum Calculating Unit 12b for each Measurement Distance Range and Generates First Integrated Spectrum

S7
NO — Is Spectrum Calculated Predetermined Number of Times in the Selected Beam Direction?
YES

S15
SN Ratio Calculating Unit 12f2 Calculates SN Ratio of First Integrated Spectrum at each Distance

S17
Second SN Ratio Determining Unit 12k Determines Whether or Not the Number of Distance Ranges, Which are Included in Determination Target Wind Speed Measurement Section and Have SN Ratio of First Integrated Spectrum Greater than or Equal to Second Threshold Value, Is Greater than or Equal to Lower Limit Number and Stores Result in NDsum.

S16
YES — SN Ratio of First Integrated Spectrum at that Distance ≥ First Threshold Value?
NO

S18
NO — NDsum = YES?
YES

S19
NO — SN Ratio of First Integrated Spectrum at that Distance ≥ Third Threshold Value?
YES

S8
First Integrated Spectrum Integrated by First Spectrum Integrating Unit 12c is Sent to Second Spectrum Integrating Unit 12e. Initialize First Spectrum Integrating Unit 12c to Zero

S9
Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum

S10
SN Ratio Calculating Unit 12f2 Calculates SN Ratio of Second Integrated Spectrum at each Distance

S11
YES — SN Ratio of Second Integrated Spectrum at that Distance ≥ First Threshold Value? — NO

S12
Doppler Wind Speed Calculating Unit 12h Determines Doppler Speed at that Distance. Integrated Spectrum Storage Unit 12d Initializes Integrated Spectrum for that Beam Direction and that Distance

S13
Overwrite and Save Integrated Spectrum Calculated for that Beam Direction and that Distance by Second Spectrum Integrating Unit 12e in Integrated Spectrum Storage Unit 12d

S14
Control Unit 13 Sends Beam Switching Command Signal to Optical Switch 8

# FIG. 16

EP 3 955 029 A1

# FIG. 17

START

Initialize Spectrum Data of each Beam Direction and each Distance
and SN Ratio Stored in Integrated Spectrum Storage Unit 12d2 to Zero — S0H / S1

Select One of Transmission and Reception Optical Systems 9a, 9b, 9c, and 9d Corresponding to
Beam Direction in Which Transmission and Reception are Performed — S2

Send Pulse Modulation Signal from Control Unit 13 to Pulse Modulator 5 and
Send Trigger Signal Synchronized with this Signal to Time Gating Unit 12a — S3

Execute Optical Transmission and Reception Operations in the Selected Beam Direction — S4

Perform A/D-Conversion on Reception Signal and Divide Reception Signal by Time Gate
Corresponding to Position on Time Axis which Corresponds to each Distance — S5

Calculate Spectrum of Reception Signal of each Distance by Performing Fourier Transform on
each of Reception Signals Divided by Time Gate — S6

First Spectrum Integrating Unit 12c Integrates Spectra Calculated by Spectrum Calculating Unit 12b
for each Measurement Distance Range and Generates First Integrated Spectrum

NO ◄— Is Spectrum
Calculated Predetermined Number of Times in the Selected
Beam Direction ? — S7

YES — S8

First Integrated Spectrum Integrated by First Spectrum Integrating Unit 12c is Sent to
Second Spectrum Integrating Unit 12e. Initialize First Spectrum Integrating Unit 12c to Zero — S9

Second Spectrum Integrating Unit 12e Reads Integrated Spectrum in the Selected Beam
Direction from Integrated Spectrum Storage Unit 12d, Integrates Integrated Spectrum with
First Integrated Spectrum for each Distance, and Generates Second Integrated Spectrum — S10

SN Ratio Calculating Unit 12f Calculates SN Ratio of Second Integrated Spectrum at each Distance

YES ◄— SN Ratio of Second Integrated Spectrum at that Distance ≥
First Threshold Value? — S11

NO

SN Ratio of
Second Integrated Spectrum at that Distance ≥
Stored Spectrum SN Ratio? — S20 — NO

YES

S12H
Doppler Wind Speed Calculating Unit 12h
Determines Doppler Speed at that Distance.
Integrated Spectrum Storage Unit 12d2 Initializes
Integrated Spectrum and SN Ratio for
that Beam Direction and that Distance

S13H
Overwrite and Save
Second Integrated Spectrum and
SN Ratio for that Beam Direction and
that Distance in Integrated
Spectrum Storage Unit 12d2

S14
Control Unit 13 Sends Beam Switching Command Signal to Optical Switch 8

# FIG. 18

EP 3 955 029 A1

# FIG. 19

START

**S0** Initialize Spectrum Data of each Beam Direction and each Distance Stored in Integrated Spectrum Storage Unit 12d to Zero

**S1** Select One of Transmission and Reception Optical Systems 9a, 9b, 9c, and 9d Corresponding to Beam Direction in Which Transmission and Reception are Performed

**S2** Send Pulse Modulation Signal from Control Unit 13 to Pulse Modulator 5 and Send Trigger Signal Synchronized with this Signal to Time Gating Unit 12a

**S3** Execute Optical Transmission and Reception Operations in the Selected Beam Direction

**S4** Perform A/D-Conversion on Reception Signal and Divide Reception Signal by Time Gate Corresponding to Position on Time Axis which Corresponds to each Distance

**S5** Calculate Spectrum of Reception Signal of each Distance by Performing Fourier Transform on each of Reception Signals Divided by Time Gate

**S6** First Spectrum Integrating Unit 12c Integrates Spectra Calculated by Spectrum Calculating Unit 12b for each Measurement Distance Range and Generates First Integrated Spectrum

**S7** NO — Is Spectrum Calculated Predetermined Number of Times in the Selected Beam Direction ?

YES

**S15** SN Ratio Calculating Unit 12f2 Calculates SN Ratio of First Integrated Spectrum at each Distance

**S16** YES — SN Ratio of First Integrated Spectrum at that Distance ≥ First Threshold Value?

NO

**S18J** NO — SN Ratio of First Integrated Spectrum at that Distance ≥ Second Threshold Value?

YES

**S8** First Integrated Spectrum Integrated by First Spectrum Integrating Unit 12c is Sent to Second Spectrum Integrating Unit 12e. Initialize First Spectrum Integrating Unit 12c to Zero

**S9** Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum

**S10** SN Ratio Calculating Unit 12f2 Calculates SN Ratio of Second Integrated Spectrum at each Distance

**S11** YES — SN Ratio of Second Integrated Spectrum at that Distance ≥ First Threshold Value? — NO

**S12** Doppler Wind Speed Calculating Unit 12h Determines Doppler Speed at that Distance. Integrated Spectrum Storage Unit 12d Initializes Integrated Spectrum for that Beam Direction and that Distance

**S13** Overwrite and Save Integrated Spectrum Calculated for that Beam Direction and that Distance by Second Spectrum Integrating Unit 12e in Integrated Spectrum Storage Unit 12d

**S14** Control Unit 13 Sends Beam Switching Command Signal to Optical Switch 8

# FIG. 20

EP 3 955 029 A1

# FIG. 21

START

Initialize Spectrum Data of each Beam Direction and each Distance Stored in
Integrated Spectrum Storage Unit 12d to Zero
~S0

Select One of Transmission and Reception Optical Systems 9a, 9b, 9c, and 9d Corresponding to
Beam Direction in Which Transmission and Reception are Performed
~S1

Send Pulse Modulation Signal from Control Unit 13 to Pulse Modulator 5 and
Send Trigger Signal Synchronized with this Signal to Time Gating Unit 12a
~S2

Execute Optical Transmission and Reception Operations in the Selected Beam Direction
~S3

Perform A/D-Conversion on Reception Signal and Divide Reception Signal by Time Gate
Corresponding to Position on Time Axis which Corresponds to each Distance
~S4

Calculate Spectrum of Reception Signal of each Distance by
Performing Fourier Transform on each of Reception Signals Divided by Time Gate
~S5

First Spectrum Integrating Unit 12c Integrates Spectra Calculated by Spectrum Calculating Unit 12b
for each Measurement Distance Range and Generates First Integrated Spectrum
~S6

NO ⟵ Is Spectrum
Calculated Predetermined Number of Times in the Selected
Beam Direction ?
~S7

YES

SN Ratio Calculating Unit 12f2 Calculates SN Ratio of First Integrated Spectrum at each Distance
~S15

First Integrated Spectrum Integrated by First Spectrum Integrating Unit 12c is Sent to
Second Spectrum Integrating Unit 12e. Initialize First Spectrum Integrating Unit 12c to Zero
~S8

Second Spectrum Integrating Unit 12e Reads Integrated Spectrum in the Selected Beam
Direction from Integrated Spectrum Storage Unit 12d, Integrates Integrated Spectrum
with First Integrated Spectrum for each Distance, and Generates Second Integrated Spectrum
~S9

SN Ratio Calculating Unit 12f2 Calculates SN Ratio of Second Integrated Spectrum at each Distance
~S10

Set One of First Integrated Spectrum and Second Integrated Spectrum
that Has Higher SN Ratio as Higher SN Ratio Integrated Spectrum
~S21

YES ⟵ SN Ratio of Higher SN Ratio Integrated Spectrum at that Distance ≥
First Threshold Value?
⟶ NO
~S11K

S12K

Doppler Wind Speed Calculating Unit 12h Determines
Doppler Speed at that Distance from Higher SN Ratio
Integrated Spectrum. Integrated Spectrum
Storage Unit 12d Initializes Integrated Spectrum and
SN Ratio for that Beam Direction and that Distance

Overwrite and Save Higher SN Ratio
Integrated Spectrum for that
Beam Direction and that Distance in
Integrated Spectrum Storage Unit 12d

S13K

S14

Control Unit 13 Sends Beam Switching Command Signal to Optical Switch 8

# FIG. 22

EP 3 955 029 A1

# FIG. 23

START

Initialize Spectrum Data of each Beam Direction and each Distance
and SN Ratio Stored in Integrated Spectrum Storage Unit 12d2 to Zero
~S0H

~S1
Select One of Transmission and Reception Optical Systems 9a, 9b, 9c, and 9d Corresponding to
Beam Direction in Which Transmission and Reception are Performed

~S2
Send Pulse Modulation Signal from Control Unit 13 to Pulse Modulator 5 and
Send Trigger Signal Synchronized with this Signal to Time Gating Unit 12a

~S3
Execute Optical Transmission and Reception Operations in the Selected Beam Direction

~S4
Perform A/D-Conversion on Reception Signal and Divide Reception Signal by Time Gate
Corresponding to Position on Time Axis which Corresponds to each Distance

~S5
Calculate Spectrum of Reception Signal of each Distance by
Performing Fourier Transform on each of Reception Signals Divided by Time Gate

~S6
First Spectrum Integrating Unit 12c Integrates Spectra Calculated by Spectrum Calculating Unit 12b
for each Measurement Distance Range and Generates First Integrated Spectrum

NO ⟨ Is Spectrum
Calculated Predetermined Number of Times in the Selected
Beam Direction ? ⟩ ~S7

YES

~S15
SN Ratio Calculating Unit 12f2 Calculates SN Ratio of First Integrated Spectrum at each Distance

~S8
First Integrated Spectrum Integrated by First Spectrum Integrating Unit 12c is Sent to
Second Spectrum Integrating Unit 12e. Initialize First Spectrum Integrating Unit 12c to Zero

~S9
Second Spectrum Integrating Unit 12e Reads Integrated Spectrum in the Selected Beam
Direction from Integrated Spectrum Storage Unit 12d, Integrates Integrated Spectrum
with First Integrated Spectrum for each Distance, and Generates Second Integrated Spectrum

~S10
SN Ratio Calculating Unit 12f2 Calculates SN Ratio of Second Integrated Spectrum at each Distance

~S21
Set One of First Integrated Spectrum and Second Integrated Spectrum
that Has Higher SN Ratio as Higher SN Ratio Integrated Spectrum

YES ⟨ SN Ratio of
Higher SN Ratio Integrated Spectrum at that Distance ≥
First Threshold Value? ⟩ ~S11K

NO

~S20L
⟨ SN Ratio of
Higher SN Ratio Integrated Spectrum at that Distance ≥
Stored Spectrum SN Ratio? ⟩ NO

YES

S12L
Doppler Wind Speed Calculating Unit 12h Determines
Doppler Speed at that Distance from Higher SN Ratio
Integrated Spectrum. Integrated Spectrum Storage Unit 12d2
Initializes Integrated Spectrum and SN Ratio for
that Beam Direction and that Distance

S13L
Overwrite and Save Higher SN Ratio
Integrated Spectrum and SN Ratio for
that Beam Direction and that Distance in
Integrated Spectrum Storage Unit 12d2

~S14
Control Unit 13 Sends Beam Switching Command Signal to Optical Switch 8

## INTERNATIONAL SEARCH REPORT

International application No.

PCT/JP2020/015787

### A. CLASSIFICATION OF SUBJECT MATTER

G01S 17/95(2006.01)i
FI: G01S17/95

According to International Patent Classification (IPC) or to both national classification and IPC

### B. FIELDS SEARCHED

Minimum documentation searched (classification system followed by classification symbols)
G01S7/48-7/51, 17/00-17/95

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | 高林幹夫、梶山裕、 崎村武司、小竹論季、柳澤隆行, 「風力発電向けナセル搭載ドップラーライダ試作機」, 三菱電機技報, February 2019, vol. 93, no. 2, pp. 11(113)-14(116), in particular, page 12, left column, lines 2-10,, page 12, left column, lines 18-30, page 12, right column, lines 24-32, page 13, left column, table 1, page 13, left column, lines 7-15, (TAKABAYASHI, Mikio, KAJIYAMA, Yutaka, SAKIMURA, Takeshi, KOTAKE, Nobuki, YANAGISAWA, Takayuki, "Nacelle Mounted Doppler LIDAR Prototype for Wind Energy", MITSUBISHI DENKI GIHO) | 1-7,11-14,16<br>8-10,15 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 July 2020 (03.07.2020) | 21 July 2020 (21.07.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2020/015787

C (Continuation).   DOCUMENTS CONSIDERED TO BE RELEVANT

| Category* | Citation of document, with indication, where appropriate, of the relevant passages | Relevant to claim No. |
|---|---|---|
| Y | 梶山裕、藤井康宏、酒巻洋、小竹論季，「風況観測用ライダ "DIABREZZA"」，三菱電機技報, March 2015, vol. 89, no. 3, pp. 32(182)-36(186), in particular, section "5.1 Environment-adaptive control function", "6.1 Nacelle mounted type", fig. 6-7, (KAJIYAMA, Yutaka, FUJII, Yasuhiro, SAKAMAKI, Hiroshi, KOTAKE, Nobuki, "Doppler LIDAR System 'DIABREZZA' for Measuring Wind Condition", MITSUBISHI DENKI GIHO) | 1-7,11-14,16 |
| Y | KOTAKE, Nobuki, IMAKI, Masaharu, KAMEYAMA, Shumpei, "Concept of wind lidar system with the adaptive parameter tuning for various atmospheric conditions", Proceedings of 17th Coherent Laser Radar Conference, June 2013, ISBN:978-1-62993-149-4, in particular, section "optimization of signal processing parameter", fig. 1-2 | 1-7,11-14,16 |
| Y | US 6320272 B1 (LADING, Lars) 20.11.2001 (2001-11-20) column 33, lines 15-25 | 11-14,16 |
| Y | JP 2009-300425 A (OPHIR CORPORATION) 24.12.2009 (2009-12-24) paragraphs [0197]-[0203], fig. 1 5 | 11-14,16 |
| A | WO 2017/130315 A1 (MITSUBISHI ELECTRIC CORP.) 03.08.2017 (2017-08-03) entire text | 1-16 |
| A | WO 2017/175297 A1 (MITSUBISHI ELECTRIC CORP.) 12.10.2017 (2017-10-12) entire text | 1-16 |
| P,A | WO 2019/202676 A1 (MITSUBISHI ELECTRIC CORP.) 24.10.2019 (2019-10-24) entire text | 1-16 |

Form PCT/ISA/210 (continuation of second sheet) (January 2015)

**EP 3 955 029 A1**

| INTERNATIONAL SEARCH REPORT | International application No. |
|---|---|
| Information on patent family members | PCT/JP2020/015787 |

| Patent Documents referred in the Report | Publication Date | Patent Family | Publication Date |
|---|---|---|---|
| US 6320272 B1 | 20 Nov. 2001 | WO 98/42980 A1<br>EP 0970308 B1 | |
| JP 2009-300425 A | 24 Dec. 2009 | US 2009/0046289 A1<br>paragraphs [0141]-[0147], fig. 15<br>EP 2133712 A1<br>CA 2651290 A1 | |
| WO 2017/130315 A1 | 03 Aug. 2017 | US 2019/0018144 A1<br>EP 3410155 A1<br>CN 109073755 A<br>JP 6301040 B2 | |
| WO 2017/175297 A1 | 12 Oct. 2017 | US 2019/0064361 A1<br>EP 3428685 A1<br>CN 108885261 A<br>JP 6366880 B2 | |
| WO 2019/202676 A1 | 24 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2884306 B1
- EP 1589678 B1
- WO 2017130315 A
- JP 2020002798 W

### Non-patent literature cited in the description

- **T. ANDO et al.** All-fiber coherent Doppler technologies at Mitsubishi Electric Corporation. *IOP Conference Series: Earth and Environmental Science,* 2008, vol. 1
- **D. SCHLIPF et al.** Field Testing of Feedforward Collective Pitch Control on the CART2 Using a Nacelle-Based Lidar Scanner. *Journal of Physics Science Series,* 2014, vol. 555, 012090
- IEC 61400-12-1. 2017